# EUROPÄISCHE PATENTSCHRIFT

(11) **EP 4 132 813 B1**
(45) Veröffentlichungstag und Bekanntmachung des Hinweises auf die Patenterteilung: **15.07.2026**
(21) Anmeldenummer: 21716070.4
(22) Anmeldetag: 23.03.2021
(51) Int. Cl.: B60L 50/20, B60L 53/12, B60L 53/30, B60L 53/38, B60L 53/66, B60L 53/68, B62M 6/90, B60L 53/65, G07F 17/00, G06Q 30/06, B62H 3/00

(54) **SYSTEM ZUR BEREITSTELLUNG VON ELEKTROFAHRZEUGEN**
SYSTEM FOR PROVIDING ELECTRIC VEHICLES
SYSTÈME POUR PRODUIRE DES VÉHICULES ÉLECTRIQUES

(30) Priorität: 06.04.2020 DE 102020109573
(43) Veröffentlichungstag der Anmeldung: 15.02.2023
(73) Patentinhaber: ONgineer GmbH, 32339 Espelkamp (DE)
(72) Erfinder: SAAL, Per-Simon, 33613 Bielefeld (DE); MÜLLER, Andre, 32369 Rahden (DE); BREDEMEIER, Peter, 32361 Preußisch Oldendorf (DE); MÜNDEL, Claus-martin, 32369 Rahden (DE); HONERKAMP, Stefan, 49152 Bad Essen (DE)
(74) Vertreter: Lippert Stachow Patentanwälte Rechtsanwälte
(86) Internationale Anmeldenummer: PCT/EP2021/057421
(87) Internationale Veröffentlichungsnummer: WO 2021/204530

(56) Entgegenhaltungen:
- EP-A2- 0 741 441
- WO-A1-2020/004509
- WO-A2-2008/157443
- WO-A2-2014/068125
- US-A1- 2007 250 444
- US-A1- 2011 068 738
- US-A1- 2017 364 995
- US-A1- 2020 013 112
- US-A1- 2020 031 247
- US-B2- 10 498 160
- ZHU RUI ET AL: "Understanding spatio-temporal heterogeneity of bike-sharing and scooter-sharing mobility", COMPUTERS ENVIRONMENT AND URBAN SYSTEMS, NEW YORK, NY, US, vol. 81, 27 March 2020 (2020-03-27), XP086131332, ISSN: 0198-9715, [retrieved on 20200327], DOI: 10.1016/J.COMPENVURBSYS.2020.101483

## Beschreibung

Die Erfindung betrifft ein Verfahren zum Betreiben eines Systems, das ein batteriegetriebenes Fahrzeug und mehrere Stationen umfasst.

Bekannte Systeme zum Laden und zum Halten eines batteriegetriebenen Fahrzeugs werden in zunehmendem Maße im öffentlichen Raum, insbesondere in großen Städten, benötigt und verwendet. Bei solchen Systemen kommen üblicherweise mehrere Fahrzeuge, insbesondere Zweiräder, zum Einsatz, die jeweils eine Batterie und einen von der Batterie versorgten elektrischen Antrieb aufweisen. Beispielsweise kommen dabei E-Scooter und/oder E-Bikes, d. h. elektrisch angetriebene Roller und/oder elektrisch angetriebene Fahrräder, allgemein gesprochen batteriegetriebene Zweiräder mit einem elektrischen Antrieb, zum Einsatz. Es sind jedoch auch Systeme bekannt, bei denen andere batteriegetriebene Fahrzeuge zum Einsatz kommen können, beispielsweise Elektroautos. Solche Systeme werden typischerweise verwendet, um einem Nutzer eine spontane Nutzung eines batteriegetriebenen Fahrzeugs zu ermöglichen, für die er in Abhängigkeit von dem Verlauf seiner Fahrt, beispielsweise zeitabhängig, energieverbrauchsabhängig oder wegstreckenlängenabhängig, ein Nutzungsentgelt zahlt. Dabei sind bereits Systeme bekannt, bei denen ein Nutzer, insbesondere Cloud-basiert, ein ihm zugeordnetes Nutzerkonto erstellen kann und sich als Nutzer mit seinem Nutzerkonto authentifizieren kann, beispielsweise an dem Fahrzeug selbst oder an einer Station, an der das Fahrzeug angeschlossen ist. Die Authentifizierung kann auf im Stand der Technik übliche Weise erfolgen, beispielsweise durch manuelle Eingabe eines Pins an einer Benutzerschnittstelle, die an dem Fahrzeug oder der Station, an der das Fahrzeug angeschlossen ist, vorgesehen ist, oder durch Authentifizierung mittels drahtloser Übermittlung eines Codes. Beispielsweise ist bekannt, dass der Betreiber eines solchen Systems Programme bereitstellt, die auf einem Smartphone installiert werden können, wobei mittels Standard-Drahtlosschnittstellen eine Kommunikation zwischen Smartphone und Fahrzeug bzw. Station erfolgen kann, beispielsweise mittels NFC, Bluetooth, QR-Code-Scan, etc.

Bekannte Systeme bringen allgemein das Problem mit sich, dass zum einen die Batterien der batteriegetriebenen Fahrzeuge regelmäßig neu aufgeladen werden müssen und dass zum anderen an bestimmten Hotspots, von denen aus eine besonders große Anzahl an Nutzern üblicherweise eine Fahrt mit einem batteriegetriebenen Fahrzeug startet, stets eine ausreichende Anzahl an batteriegetriebenen Fahrzeugen zur Verfügung stehen muss. Allgemein besteht somit die Herausforderung, die batteriegetriebenen Fahrzeuge hinreichend oft zu laden und für eine gewünschte räumliche Verteilung der batteriegetriebenen Fahrzeuge zu sorgen, damit diese an den benötigten Stellen betriebsbereit verfügbar sind. Außerdem besteht die Anforderung, solche Fahrzeuge nach Möglichkeit vor Diebstahl bzw. Missbrauch zu schützen. Darüber hinaus ist gerade im öffentlichen Raum gewünscht, aus Wettbewerbsgründen und somit insbesondere zur Reduzierung der Kosten für die Nutzer und zur Vermeidung von insolvenzbedingten schwerwiegenden Ausfällen eine Vielzahl an verschiedenen Betreibern von batteriegetriebenen Fahrzeugen agieren zu lassen.

Im Stand der Technik sind verschiedene Ansätze bekannt, um solche Systeme mit den beschriebenen Anforderungen zu realisieren. Beispielsweise sind Systeme bekannt, bei denen Zweiräder eingesetzt werden, ohne dass räumlich festgelegte Stationen bereitgestellt werden, an denen diese Fahrzeuge angeschlossen und aufgeladen werden können. Dies ist insbesondere bei der Bereitstellung von E-Scootern üblich.

Bei solchen Systemen werden die Fahrzeuge über GPS-Ortung geortet, und die Fahrzeuge übermitteln über Funksignale ihren Ladezustand. Solche Systeme machen den Einsatz von mobilem Ladepersonal nötig. Solches mobiles Ladepersonal kann beispielsweise direkt eine mobile Ladestation mit sich führen, um die Fahrzeuge an dem jeweiligen Standort, an dem sie sich befinden, aufzuladen, wobei die Fahrzeuge je nach Bedarf und räumlicher Verteilung von diesem mobilen Ladepersonal zusätzlich an vorgegebene Orte gebracht werden können, um eine sinnvolle räumliche Verteilung der Fahrzeuge zu gewährleisten. Auch ist die Möglichkeit bekannt, dass das mobile Ladepersonal die Fahrzeuge zunächst zum Laden an eine ortsfeste Ladestation bringen und anschließend die Fahrzeuge verteilen. Solche Systeme bringen den wesentlichen Vorteil mit sich, dass die Fahrzeuge ohne jedwede Bildung an räumlich festgelegte Stationen von einem Nutzer verwendet werden können, so dass solche Systeme eine sehr gute Mobilität eines Nutzers und eine sehr einfache Handhabung ermöglichen. Allerdings bringen solche Systeme den Nachteil mit sich, dass zum einen die Fahrzeuge in keinster Weise gegen Diebstahl bzw. Missbrauch geschützt sind, und dass zum anderen bedingt
durch den nötigen Einsatz von mobilem Ladepersonal hohe Personalkosten entstehen und wegen der zwingend erforderlichen Benutzung von Fahrzeugen durch das mobile Ladepersonal Emissionen und somit negative Umwelteinflüsse in Kauf genommen werden müssen. Im Stand der Technik sind ferner Systeme bekannt, bei denen ortsfeste Stationen vorgesehen sind, wobei nach jeder Nutzung des Fahrzeugs das Fahrzeug an eine solche ortsfeste Station zu bringen ist und dort abzuschließen ist, so dass eine Fahrt mit dem Fahrzeug immer nur an einer der Stationen beginnen und an einer der Stationen enden kann. Solche Systeme bringen den wesentlichen Vorteil mit sich, dass beim Bereitstellen einer Ladefunktion an den Stationen die Batterien der Fahrzeuge stets hinreichend aufgeladen sein können und dass zum anderen durch die Aufstellung der Stationen an vorgesehenen Orten die Verteilung der Fahrzeuge direkt festgelegt werden kann und darüber hinaus einem Missbrauch bzw. Diebstahl vorgebeugt werden kann. Allerdings bringen solche Systeme den wesentlichen Nachteil mit sich, dass durch die Gebundenheit an die ortsfesten Stationen die Flexibilität bei der Verwendung des Fahrzeugs durch einen Nutzer eingeschränkt ist und dass darüber hinaus für den Fall, dass in einem räumlichen Gebiet unterschiedliche Betreiber zum Einsatz kommen sollen, entweder eine Abstimmung zwischen sämtlichen Betreibern über die Eigenschaften der aufzustellenden Stationen oder aber das Aufstellen unterschiedlicher Stationen von unterschiedlichen Betreibern erforderlich ist, was zum einen kostspielig ist, zum anderen aber auch riskant, da sowohl das Ausscheiden als auch das neu Einsteigen eines Betreibers erschwert wird. Darüber hinaus ist bei solchen Systemen die Bedienung durch einen Nutzer verkompliziert, da ein Nutzer sich an die Verriegelungs- und Ladevorgaben gewöhnen und daran halten muss, damit das Fahrzeug an den Stationen jeweils so abgestellt wird, dass an den Stationen ein Laden der Fahrzeuge erfolgen kann. Denn zum Laden ist entweder ein drahtgebundenes Laden erforderlich, was ein gewisses technisches Verständnis des Nutzers voraussetzt, damit der Ladevorgang korrekt initiiert wird, oder aber es ist eine sehr präzise Anordnung des Fahrzeugs relativ zur Station erforderlich, damit bei einem induktiven Laden ein hinreichender Energieübertrag von der Station zum Fahrzeug erfolgen kann. Bei fehlender Energieübertragung aufgrund fehlerhaften Fahrzeuganschlusses entstehen Nutzungsausfälle wegen ungeladener Batterien. Beispielsweise offenbart US 2020/0031247 A1 ein System mit einem Fahrzeug und mehreren Stationen, wobei die Stationen zum Halten und Erkennen des Fahrzeugs sowie zum Laden des Fahrzeugs mit einem an das erkannte Fahrzeug angepassten Ladeprofil ausgebildet sind.

US 2011/0068738 A1 offenbart ein System mit einer Ladestation und einem elektrischen Fahrzeug, wobei Station und Fahrzeug dazu ausgebildet sind, dass das Fahrzeug durch die Stationen mittels induktiven Ladens geladen wird, wobei zum Realisieren des induktiven Ladens die Empfängerspule des Fahrzeugs nahe an der Sendespule der Station gehalten wird. EP 0 741 441 A2 offenbart eine Station und ein batteriebetriebenes Fahrrad, wobei die Station zum Halten des Fahrrads und zum Laden des Fahrrads mittels induktiven Ladens ausgebildet ist. WO 2014/068125 A2 offenbart ein System mit Stationen und einem Fahrzeug, wobei das Fahrzeug eine Haltevorrichtung umfasst, die korrespondierend zu einer Fixiereinrichtung einer jeden Station ausgebildet ist und mittels derer das Fahrzeug zuverlässig an der Station gehalten werden kann, wobei die Stationen zum elektrisch gesteuerten Fixieren bzw. Freigeben des Fahrrads ausgebildet sind. US 10,498,160 B2 offenbart verschiedene Schaltungen zur Realisierung eines optimierten induktiven Ladens. WO 2008/157443 A2 offenbart ein System mit mehreren Stationen und mehreren Fahrzeugen, wobei die Nutzung eines Fahrzeugs durch einen Nutzer elektrisch erfasst wird und dem Nutzerkonto des Nutzers in Abhängigkeit von seiner Nutzung Informationen zugeschrieben werden. WO 2020/004509 A1 offenbart ein System mit Stationen zum Halten von batteriebetriebenen Fahrzeugen sowie Stationen zum Aufbewahren und Laden von Batterien, wobei die batteriebetriebenen Fahrzeuge und Batterien auf eine elektronische Nutzeridentifikation hin verwendet werden können und den Nutzerkonten der jeweiligen Nutzer verwendungsspezifische Informationen zugeschrieben werden. US 2017/036499 A1 offenbart ein System mit Stationen und batteriebetriebenen Fahrrädern, wobei die Position der batteriebetriebenen Fahrräder erfasst wird und einem Nutzerkonto in Abhängigkeit von einer Nutzung des Fahrrads, insbesondere unter Berücksichtigung seiner räumlichen Position, Informationen zugeschrieben werden. In dem Artikel "Understanding spatio-temporal heterogeneity of bike-sharing and scooter-sharing mobility" von Zhu Rui et al. in "A Computers, Environment and Urban Systems", 81, 27. März 2020, sowie in US 2007/0250444 A1 sind verschiedene Systeme zur räumlichen Verteilung und Verwendung von batteriebetriebenen Fahrzeugen umfassend deren Bereitstellung und die Zuordnung von Nutzungsinformationen zu Nutzerkonten offenbart.

Der vorliegenden Erfindung liegt die Aufgabe zugrunde, ein Verfahren zum Betreiben eines Systems, das ein batteriegetriebenes Fahrzeug und mehrere Stationen umfasst, bereitzustellen, mit dem zumindest ein Nachteil bekannter Systeme, Stationen, Verfahren oder Verwendungen zumindest teilweise behoben werden kann.

Vorliegend offenbart ist ein System zum Laden und zum Halten eines batteriegetriebenen Fahrzeugs. Das System ist dazu geeignet, ein Fahrzeug, das insbesondere als Zweirad ausgebildet ist, insbesondere als E-Scooter oder E-Bike, das einen elektrischen Antrieb aufweist, der durch eine Batterie des Fahrzeugs mit Energie versorgt wird, zu laden und zu halten. Das System umfasst zumindest eine Station, die eine Halterung zur Aufnahme eines Halteabschnitts des Fahrzeugs aufweist. Der Halteabschnitt ist somit ein an dem Fahrzeug vorgesehener Abschnitt. Grundsätzlich ist es möglich, die Halterung so auszubilden, dass die Halterung zur Aufnahme von unterschiedlich ausgebildeten Halteabschnitten ausgebildet ist. Beispielsweise kann die Halterung zur Aufnahme eines zylindrischen, quaderförmigen oder knochenförmigen Halteabschnitts ausgebildet sein, wobei die Vorgabe an den Halteabschnitt lediglich darin besteht, dass der Halteabschnitt eine gewisse Mindestgröße aufweist, beispielsweise eine Größe von mindestens 3 cm in einer ersten räumlichen Dimension, mindestens 3 cm in einer zweiten, auf der ersten senkrecht stehenden räumlichen Dimension und mindestens 1 cm in einer dritten, auf den beiden erstgenannten Dimensionen senkrecht stehenden Dimension. Beispielsweise kann der Halteabschnitt dadurch begrenzt sein, dass seine Längen in zumindest zwei Dimensionen festgelegt sind, beispielsweise auf maximal 2 cm in einer dritten Dimension und maximal 5 cm in der ersten Dimension. Das System ist von der konkreten Ausgestaltung des Halteabschnitts unabhängig, da die Station grundsätzlich eine Halterung mit den nachfolgend beschriebenen Eigenschaften aufweist, die zur Aufnahme eines wie auch immer gestalteten, zur Halterung mit den nachfolgend beschriebenen Merkmalen korrespondierend ausgebildeten Halteabschnitts ausgebildet ist. Die Station weist ferner eine elektronische Komponente auf, die eine induktive Ladeeinrichtung mit einer Sendespule umfasst, wobei die Position der Sendespule relativ zu der Halterung der Station festgelegt ist. Halterung und Ladeeinrichtung sind somit in ihren räumlichen Positionen zueinander festgelegt. Besonders bevorzugt ist die Station so ausgebildet, dass die festgelegte räumliche Position der Ladeeinrichtung relativ zur Halterung nicht veränderbar ist. Die Halterung weist eine Fixiereinrichtung auf. Die Fixiereinrichtung kann zumindest zwei verschiedene Zustände einnehmen, nämlich einen verschlossenen Zustand und einen offenen Zustand. In dem verschlossenen Zustand ist die Fixiereinrichtung zum Verhindern eines Entnehmens des Halteabschnitts von der Halterung ausgebildet. In dem offenen Zustand ist die Fixiereinrichtung zum Freigeben des Halteabschnitts ausgebildet. Die Halterung weist einen Aufnahmebereich auf.

Der Aufnahmebereich ist an seinen beiden ihn in einer Transversalrichtung begrenzenden Transversalenden durch transversale Seitenwände begrenzt, und der Aufnahmebereich ist an einem ersten ihn in einer senkrecht zur Transversalrichtung verlaufenden Längsrichtung begrenzenden Längsende durch eine Längsseitenwand begrenzt und an seinem dem ersten gegenüberliegenden zweiten Längsende offen, so dass ein Einschieben des Halteabschnitts in den Aufnahmebereich ausgehend von dem zweiten Längsende entlang der Längsrichtung ermöglicht ist. Die Halterung der Station des vorliegend offenbarten Systems ist somit jedenfalls dadurch definiert, dass sie einen Aufnahmebereich aufweist, der in Transversalrichtung an seinen beiden Enden durch transversale Seitenwände begrenzt ist und in Längsrichtung an einem Längsende durch eine Längsseitenwand begrenzt ist, wobei der Halteabschnitt ausgehend von dem zweiten Längsende zum ersten Längsende hin in den Aufnahmebereich einführbar ist und die Fixiereinrichtung in ihrem offenen Zustand ein Entnehmen des Halteabschnitts aus dem zweiten Längsende des Aufnahmebereichs ermöglicht und in ihrem verschlossenen Zustand verhindert, dass der Halteabschnitt am zweiten Längsende aus dem Aufnahmebereich entnommen werden kann. Es sind unterschiedlichste Ausführungsformen möglich, über die eine entsprechende Halterung realisiert sein kann, der jeweils ein entsprechender Halteabschnitt des Fahrzeugs zugeordnet ist. Beispielsweise ist es möglich, die Halterung U-förmig auszubilden, wobei die Fixiereinrichtung als Verschlusseinrichtung am offenen Ende des U ausgebildet ist, wobei in dem offenen Zustand der Fixiereinrichtung das offene Ende des U nicht verschlossen ist, so dass der Halteabschnitt an dem zweiten Längsende des Aufnahmebereichs entnommen werden kann, wohingegen im geschlossenen Zustand die Fixiereinrichtung das offene Ende des U versperrt, so dass der Halteabschnitt nicht an dem zweiten Längsende des Aufnahmebereichs aus diesem entnommen werden kann.

Beispielsweise ist es möglich, den Halteabschnitt plattenförmig auszugestalten, wobei der Aufnahmebereich zum Aufnehmen eines Plattenabschnitts des Halteabschnitts ausgebildet ist und wobei der Halteabschnitt eine Ausnehmung aufweist, durch die im geschlossenen Zustand ein sich von der Fixiereinrichtung ausgebildeter Haltebolzen erstreckt, wobei dieser Haltebolzen bei einem Übergang von dem geschlossenen Zustand zu dem offenen Zustand in der Fixiereinrichtung zurückgefahren wird, so dass er sich nicht mehr in die Aussparung des Halteabschnitts erstreckt, so dass der Halteabschnitt am zweiten Längsende vom Aufnahmebereich entnommen werden kann. Beispielsweise ist es möglich, Halteabschnitt und Aufnahmebereich als Feder und Nut auszugestalten, insbesondere mit Rastverbindungen, deren Ineinandergreifen reversibel gelöst werden kann, um reversibel zwischen dem geschlossenen und dem offenen Zustand wechseln zu können, wobei im offenen Zustand der Halteabschnitt ausgehend von dem zweiten Längsende in den Aufnahmebereich eingeschoben werden kann und am zweiten Längsende von dem Aufnahmebereich entnommen werden kann. Halteabschnitt und Aufnahmeabschnitt sind jeweils durchgehend oder als umfassend mehrere voneinander beabstandete Abschnitte ausgebildet und wirken zusammen, wobei bei dem Vorsehen von mehreren voneinander beabstandeten Abschnitten diese bevorzugt jeweils starr miteinander verbunden sind unter Ausbildung des Halteabschnitts bzw. des Aufnahmebereichs. Allgemein ist der Aufnahmebereich bzw. die Fixiereinrichtung mit dem Aufnahmebereich so ausgestaltet, dass ein entsprechender Halteabschnitt im offenen Zustand der Fixiereinrichtung ausgehend von dem zweiten Längsende in den Aufnahmebereich eingeschoben werden kann, indem er in Längsrichtung zum ersten Längsende des Aufnahmebereichs hin geschoben wird, insbesondere ausschließlich in Längsrichtung bewegt wird, und aus dem Aufnahmebereich entnommen werden kann, indem er am zweiten Längsende des Aufnahmebereichs in Längsrichtung vom ersten Längsende weg aus dem Aufnahmebereich herausgeschoben wird, insbesondere ausschließlich in Längsrichtung bewegt wird, wobei in dem geschlossenen Zustand ein solches Entnehmen bzw. Hinausschieben durch die Fixiereinrichtung verhindert ist.

Das vorliegend offenbarte System weist ferner einen Adapter zur Montage an dem Fahrzeug auf. Bei besonders bevorzugten Ausführungsformen handelt es sich bei dem Fahrzeug um ein Zweirad, wobei der Adapter zur Montage an einer zylindrischen Lenkstange des Zweirads ausgebildet ist und somit eine Aufnahme für die zylindrische Lenkstange aufweist, in der die zylindrische Lenkstange angebracht werden kann und mit der er die zylindrische Lenkstange in einer Betriebsposition umschließt, insbesondere kraftschlüssig und/oder formschlüssig umschließt, zum Gewährleisten einer positionsfesten Fixierung des Adapters an der Lenkstange. Bei dieser besonders bevorzugten Ausführungsform steht der Adapter somit in zumindest einer Richtung über die zylindrische Lenkstange vor, besonders bevorzugt an der mit Bezug auf die Fahrtrichtung des Zweirads nach vorne weisenden Seite der Lenkstange. In einer Ausführungsform ist der Adapter lösbar, insbesondere nur durch ein nicht-handelsübliches Schlüsselwerkzeug lösbar, an dem Fahrzeug befestigt. In einer Ausführungsform ist der Adapter unlösbar mit dem Fahrzeug verbunden. In einer Ausführungsform ist der Adapter als Teil des Fahrzeugs in diesem integriert. In einer Ausführungsform weist der Adapter eine Austrittsöffnung für elektromagnetische Strahlung auf, durch die elektronische Komponenten des Adapters Signale in die Umgebung um das Fahrzeug, bevorzugt zu der Station bzw. korrespondierender elektronischer Komponente der Station aussenden kann. Allgemein ist die Austrittsöffnung bevorzugt durch eine Kunststoffabdeckung verdeckt. Der Adapter kann in einer Lenkstange eines Fahrzeugs integriert sein, wobei dann selbstverständlich die Lenkstange bevorzugt die genannte Austrittsöffnung aufweist. Der Adapter weist eine zur Ladeeinrichtung korrespondierende Ladevorrichtung mit einer Empfängerspule auf. Der Aufnahmebereich erstreckt sich zwischen seinen Längsenden in Längsrichtung über mindestens 3 cm, und die Sendespule weist eine Querschnittsfläche von mindestens 8 cm², insbesondere mindestens 10 cm², insbesondere mindestens 15 cm², auf. Die Sendespule kann mehrere Spulenelemente umfassen, die jeweils eine Spulenachse aufweisen, um die ihre Spulenwicklungen verlaufen, wobei die Spulenelemente gemeinsam die genannte Querschnittsfläche ausbilden können. Bevorzugt ist die Fixiereinrichtung so ausgebildet, dass sie in dem geschlossenen Zustand eine Beweglichkeit des Halteabschnitts durch Vorsehen von Begrenzungen des Aufnahmebereichs an seinen beiden Transversalenden und an seinem ersten Längsende, und durch Vorsehen einer Begrenzung an dem zweiten Längsende des Aufnahmebereichs und/oder durch Vorsehen einer Krafteinleitungseinrichtung, die eine Kraft in Längsrichtung auf den Halteabschnitt zum ersten Längsende hin ausübt, auf einen Haltetoleranzbereich festlegt, der in seiner Transversalerstreckung und in seiner Längserstreckung festgelegt ist, wobei die Ladeeinrichtung und die Ladevorrichtung dergestalt zueinander korrespondierend ausgebildet sind, dass bei einer Anordnung der Ladevorrichtung relativ zu der Ladeeinrichtung innerhalb eines Positionstoleranzbereichs eine Übertragung von elektrischer Energie von der Ladeeinrichtung zu der Ladevorrichtung mit einem Wirkungsgrad von über 75 %, insbesondere über 80 % ermöglicht ist, insbesondere von über 85 %, insbesondere von über 90 %, wobei der Positionstoleranzbereich zumindest dieselbe Transversalerstreckung und dieselbe Längserstreckung die der Haltetoleranzbereich aufweist. Indem sich der Aufnahmebereich zumindest im offenen Zustand der Fixiereinrichtung zwischen seinen Längsenden in Längsrichtung über mindestens 3 cm erstreckt und die Sendespule eine Querschnittsfläche von mindestens 8 cm² aufweist, ist gewährleistet, dass der Aufnahmebereich zur Aufnahme einer Vielzahl an unterschiedlich ausgestalteten Halteabschnitten ausgebildet ist, wohingegen die Sendespule aufgrund ihrer hinreichend großen Querschnittsfläche eine hinreichend gute Kopplung zwischen Sendespule und Empfängerspule über einen erheblichen Toleranzbereich der Anordnung der Empfängerspule relativ zur Sendespule gewährleistet. Die Querschnittsfläche der Sendespule bezieht sich dabei auf die Fläche des Querschnitts der Sendespule senkrecht zu ihrer Spulenachse, um die die Wicklungen der Spule umlaufend verlaufen. Bei der Ausbildung der Sendespule durch mehrere Spulenelemente bezieht sich die Querschnittsfläche auf die Summe der Querschnittsflächen der Spulenelemente, die jeweils senkrecht zur jeweiligen Spulenachse des jeweiligen Spulenelements verläuft. Allgemein sind bevorzugt Sendespule und Empfängerspule in dem geschlossenen Zustand der Fixiereinrichtung zu einer solchen Ausrichtung zueinander gezwungen, in der ihre Spulenachsen einen Winkel von weniger als 20°, insbesondere weniger als 10° zueinander aufweisen. Allgemein sei darauf hingewiesen, dass bei der Ausgestaltung der Sendespule als umfassend mehrere Spulenelemente die Ausrichtung sämtlicher die genannte Querschnittsfläche der Sendespule ausbildender Spulenelemente entsprechend zu der Ausrichtung der Empfängerspule ist, wobei auch die Empfängerspule entsprechend mehrere Spulenelemente aufweisen kann, die dann entsprechend jeweils zu den Spulenelementen der Sendespule ausgerichtet sind, so dass zu den Spulenelementen der Sendespule, die die genannte Querschnittsfläche ausbilden, jeweils zumindest eines der Spulenelemente der Empfängerspule ausgerichtet ist. Entsprechend ist bei einer Angabe betreffend Verhältnisse zwischen der Anzahl an Windungen der Sendespule und der Anzahl an Windungen der Empfängerspule bei der Ausbildung von zumindest einer der Spulen durch mehrere Spulenelemente auf die jeweils zugeordneten Windungen von Empfängerspule und Sendespule abgestellt, durch die das Transformationsverhältnis zwischen den beiden Spulen definiert ist. Allgemein sei an dieser Stelle darauf hingewiesen, dass durch das positionsfeste Anordnen des Adapters an dem Fahrzeug die Relativposition von Adapter und Halteabschnitt zueinander festgelegt ist. In einer Ausführungsform ist der Halteabschnitt zumindest abschnittsweise, insbesondere vollständig von dem Adapter ausgebildet. Indem die Fixiereinrichtung dazu ausgebildet ist, in dem geschlossenen Zustand eine Beweglichkeit des Halteabschnitts durch Vorsehen von Begrenzungen des Aufnahmebereichs an seinen beiden Transversalenden und an seinem ersten Längsende, und durch Vorsehen einer Begrenzung an dem zweiten Längsende des Aufnahmebereichs und/oder durch Vorsehen einer Krafteinleitungseinrichtung, die eine Kraft in Längsrichtung auf den Halteabschnitt zum ersten Längsende hin ausübt, auf einen Haltetoleranzbereich festzulegen und indem Ladeeinrichtung und Ladevorrichtung dergestalt zueinander korrespondierend ausgebildet sind, dass sie eine Energieübertragung von Sendespule auf Empfängerspule mit einem sehr hohen Wirkungsgrad ermöglichen, wenn die Ladevorrichtung relativ zur Ladeeinrichtung innerhalb eines Positionstoleranzbereichs angeordnet ist, der zumindest in der Transversalrichtung und der Längsrichtung zumindest dieselben Erstreckungen wie der Haltetoleranzbereich aufweist, ist zuverlässig gewährleistet, dass ein effizientes Laden der Batterie des Zweirads ermöglicht ist, wenn das Zweirad über seinen Halteabschnitt in dem geschlossenen Zustand der Fixiereinrichtung an der Station positionsfest gehalten ist. Dabei ist selbstverständlich vorgesehen, dass der Adapter mit der Batterie des elektrischen Zweirads elektrisch leitend verbunden ist, damit über den Adapter und somit über die von der Ladevorrichtung empfangene elektrische Energie ein Laden der Batterie erfolgen kann. Die elektrischen Ausgänge der Ladevorrichtung speisen in dem Fahrzeug somit die Batterie des Fahrzeugs und sind somit an die Ladungseingänge der Batterie angeschlossen. Allgemein bevorzugt umfasst das System zumindest ein Fahrzeug, das den Adapter und den Halteabschnitt aufweist. Die Fixiereinrichtung kann zur Beschränkung der Beweglichkeit des Halteabschnitts in dem Aufnahmebereich in dem geschlossenen Zustand auf verschiedene Weise ausgebildet sein. Beispielsweise kann die Fixiereinrichtung in den transversalen Seitenwänden und der Längsseitenwand mechanisch verfahrbare Wandbereiche aufweisen, die von der jeweiligen Seitenwand aus zur Mitte des Aufnahmebereichs verfahren werden können, wohingegen die Fixiereinrichtung in dem geschlossenen Zustand an dem zweiten Längsende des Aufnahmebereichs eine feste Begrenzungswand vorsieht, die in dem geschlossenen Zustand den Aufnahmebereich in Längsrichtung begrenzt. Dabei sei darauf hingewiesen, dass der Halteabschnitt sich in einigen Ausführungsformen nur abschnittsweise in dem Aufnahmebereich erstreckt, so dass in dem Aufnahmebereich in dem geschlossenen Zustand der in dem Aufnahmebereich angeordnete Abschnitt des Halteabschnitts in seiner Beweglichkeit entsprechend begrenzt ist, wodurch selbstverständlich der Halteabschnitt an sich in seiner Beweglichkeit begrenzt ist. Beispielsweise kann die Fixiereinrichtung dergestalt ausgebildet sein, dass die Halterung eine U-förmige Aufnahme aufweist, wobei die Fixiereinrichtung ein verfahrbares Mittel aufweist, dass an dem offenen Ende des U in dem geschlossenen Zustand angeordnet ist und zum geschlossenen Ende des U hin verfährt, wobei insbesondere dieses verfahrbare Element einen zum geschlossenen Ende des U weisenden Kreisbogenabschnitt aufweisen kann, so dass eine Beweglichkeit eines wie auch immer gestalteten Halteabschnitts, der in dem Aufnahmebereich angeordnet ist, in dem geschlossenen Zustand der Fixiereinrichtung durch die Fixiereinrichtung begrenzt ist, indem die Fixiereinrichtung Begrenzungen des Aufnahmebereichs sowohl an seinen Transversalenden als auch an seinen beiden Längsenden gewährleistet. Die Krafteinleitungseinrichtung, die alternativ oder ergänzend zu dem Vorsehen einer Begrenzung an dem zweiten Längsende des Aufnahmebereichs durch die Fixiereinrichtung bereitgestellt sein kann, ist dazu eingerichtet, eine Kraft in Längsrichtung auf den Halteabschnitt zum ersten Längsende hin auszuüben, somit in einer Richtung, die von dem zweiten Längsende zum ersten Längsende des Aufnahmebereichs weist. Dem Fachmann sind verschiedenste Möglichkeiten bekannt, eine solche Krafteinleitungseinrichtung zu gewährleisten. Beispielsweise kann die Krafteinleitungseinrichtung an der Begrenzung vorgesehen sein, die den Aufnahmebereich an seinem zweiten Längsende begrenzt. Beispielsweise kann die Krafteinleitungseinrichtung außerhalb des Halteabschnitts, beispielsweise an dem Adapter, der an dem Fahrzeug montiert ist, angreifen. Beispielsweise kann die Krafteinleitungseinrichtung als mechanisches Federelement oder als elektromechanisches Bauteil, beispielsweise durch einen in Längsrichtung elektrisch verfahrbaren Bolzen gewährleistet sein. Beispielsweise kann die Krafteinleitungseinrichtung an anderer Stelle auf das Fahrzeug einwirken, insbesondere durch Einwirkung auf das Rad des Fahrzeugs, insbesondere unter Ausnutzung eines Gefälles. Dabei übt die Krafteinleitungseinrichtung stets eine Kraft auf den Halteabschnitt, mittelbar oder unmittelbar, in Längsrichtung zum ersten Längsende hin aus. Die Beweglichkeit des Halteabschnitts in dem Aufnahmebereich ist somit bevorzugt durch Einwirkung der Kraft begrenzt.

Selbstverständlich kann die Begrenzung der Beweglichkeit auf den Haltetoleranzbereich in der Ausführungsform dadurch überwunden werden, dass eine der von der Krafteinleitungseinrichtung aufgebrachten Kraft entgegenwirkende Kraft auf das Fahrzeug bzw. den Halteabschnitt ausgeübt wird. Bevorzugt ist die Krafteinleitungseinrichtung so ausgebildet, dass sie eine Kraft auf den Halteabschnitt, mittelbar oder unmittelbar, in Längsrichtung zum ersten Längsende des Aufnahmebereichs hin ausübt, die mindestens 5 N, insbesondere mindestens 10 N beträgt, und die überwunden werden muss, damit die Beschränkung der Beweglichkeit des Halteabschnitts in dem Aufnahmebereich zum Bewegen des Halteabschnitts aus dem Haltetoleranzbereich überwunden werden muss.

Selbstverständlich ist die Tatsache, dass die Fixiereinrichtung in dem geschlossenen Zustand ein Entnehmen des Halteabschnitts am zweiten Längsende des Aufnahmebereichs verhindert, unabhängig oder ergänzend zu dem Vorsehen der Krafteinleitungseinrichtung vorsehbar. Es bestehen verschiedene Möglichkeiten, um eine Übertragungseffizienz von über 75 %, insbesondere über 80 %, insbesondere von über 90 % innerhalb eines Positionstoleranzbereichs zwischen zwei Spulen bei einem induktiven Laden bereitzustellen. Hierzu ist die Betriebsfrequenz der Sendespule in Abhängigkeit von der Induktivität der Spulen und der Kapazitäten der in den Schaltkreisen von Sende- und Empfängerspule vorgesehenen Kondensatoren einzustellen. Die Erfinder haben erkannt, dass es für das vorliegend offenbarte System relevant ist, dass das induktive Laden nicht wie sonst üblich auf einen vorbestimmten, sehr kurzen Abstand zwischen Empfängerspule und Sendespule hin optimiert wird, sondern dass wegen des adaptiven Gedankens, der dem vorliegend offenbarten System zugrunde liegt, gerade ein Positionstoleranzbereich vorgesehen sein muss, innerhalb dessen eine Energieübertragung von der Sendespule auf die Empfängerspule mit einer hohen Effizienz gewährleistet werden kann. Als besonders vorteilhaft hat sich herausgestellt, die Induktivitäten von Sende- und Empfängerspule, die Kapazitäten der Schaltkreise von Ladevorrichtung und Ladeeinrichtung und die Betriebsfrequenz so einzustellen, dass bei fluchtender und paralleler Ausrichtung der Spulenachsen in einem Abstandsbereich vom 1 mm bis 2 cm in Richtung ihrer Spulenachsen eine Energieübertragung mit einem Wirkungsgrad von über 75 %, insbesondere über 80 %, insbesondere über 85 %, ermöglicht ist. Die Erfinder haben somit erkannt, dass nicht das Optimieren einer absoluten Effizienz bei einem bestimmten Abstand zwischen Sendespule und Empfängerspule für das vorliegend offenbarte System besonders vorteilhaft ist, sondern gerade das Vorsehen eines Positionstoleranzbereichs, innerhalb dessen eine durchgehend sehr hohe Übertragungseffizienz gewährleistet ist.

Das vorliegend offenbarte System bringt somit wesentliche Vorteile mit sich. Durch das Vorsehen eines Adapters, der an einem Fahrzeug positionsfest montierbar ist, kann das System für verschiedene Fahrzeuge eingesetzt werden, die sich insbesondere in ihren Ausgestaltungen unterscheiden können. So kann durch das vorliegend offenbarte System beispielsweise ermöglicht sein, mit dem vorliegend offenbarten System in einem öffentlichen Raum eine Vielzahl an Fahrzeugen unterschiedlicher Anbieter zur Nutzung bereitzustellen. Beispielsweise kann der Adapter dazu vorgesehen sein, an einer zylindrischen Lenkstange eines E-Scooters positionsfest montiert zu werden, wobei die Lenkstange gleichzeitig den Halteabschnitt des Fahrzeugs bereitstellt, so dass E-Scooter unterschiedlicher Betreiber, die sich insbesondere in dem Neigungswinkel ihrer Lenkstangen und dem Durchmesser ihrer Lenkstangen unterscheiden und die sich in der Ladetechnik ihrer Batterien unterscheiden, durch das vorliegend offenbarte System betrieben werden können, da die Fixiereinrichtung dazu ausgebildet ist, in dem geschlossenen Zustand bei Aufnahme eines Halteabschnitts der zylindrischen Lenkstange unterschiedlicher E-Scooter stets die Beweglichkeit des Halteabschnitts auf einen Haltetoleranzbereich festzulegen und da wegen der Abgestimmtheit von Sendespule der Station und Empfängerspule des Adapters eine Energieübertragung innerhalb des Positionstoleranzbereichs gewährleistet sein kann, wobei die Fixiereinrichtung darauf hinwirkt, dass die Empfängerspule sich in dem Positionstoleranzbereich relativ zur Sendespule befindet, wenn der Halteabschnitt der zylindrischen Lenkstange eines jedweden E-Scooters in der Halterung im geschlossenen Zustand der Fixiereinrichtung gehalten ist.

In einer Ausführungsform weist die Fixiereinrichtung eine Fahrrinne zum Aufnehmen von zumindest einem Rad des Fahrzeugs auf, die in Längsrichtung verläuft und zumindest in einem Gefälleabschnitt, der insbesondere eine Längserstreckung von mindestens 10 cm, insbesondere mindestens 15 cm, insbesondere mindestens 20 cm, aufweist, ein Gefälle aufweist, das mit einer in Längsrichtung verlaufenden Gefällerichtung vertikal von oben nach unten verläuft. Das Gefälle beträgt bevorzugt mindestens 3 %, insbesondere mindestens 5 %. In dem Gefälleabschnitt verläuft die in der bestimmungsgemäßen Betriebsposition der Fahrrinne nach oben weisende Seite somit in der Gefällerichtung vertikal von oben nach unten, d. h. die vertikale Höhe der Oberseite der Fahrrinne wird in der Gefällerichtung weniger. Die Gefällerichtung verläuft in Richtung vom ersten Längsende zum zweiten Längsende des Aufnahmebereichs. Besonders bevorzugt weist die Fahrrinne einen Steigungsabschnitt auf, der in der Gefällerichtung vor dem Gefälleabschnitt angeordnet ist, so dass bei einem Verlauf entlang der Gefällerichtung zuerst der Steigungsabschnitt und sich dann an den Steigungsabschnitt anschließend der Gefälleabschnitt vorgesehen ist. In dem Steigungsabschnitt verläuft die Fahrrinne entlang der Gefällerichtung vertikal von unten nach oben, d. h. dass die bei der bestimmungsgemäßen Betriebsposition nach oben weisende Oberseite der Fahrrinne in dem Steigungsabschnitt eine Höhe aufweist, die entlang der Gefällerichtung im Steigungsabschnitt sich vergrößert. Durch das Vorsehen des Gefälleabschnitts, dessen Gefällerichtung in Längsrichtung verläuft und dessen Gefällerichtung in Richtung vom zweiten Längsende zum ersten Längsende des Aufnahmebereichs verläuft und somit in Längsrichtung zur Längsseitenwand hin, ist auf besonders einfache Weise gewährleistet, dass die Fixiereinrichtung die Beweglichkeit des Halteabschnitts in dem geschlossenen Zustand auf einen vordefinierten Haltetoleranzbereich eingrenzt und insbesondere die Anordnung des Halteabschnitts festlegt. Denn durch das Vorsehen des Gefälleabschnitts zwingt die Fixiereinrichtung das Rad des Fahrzeugs zu einer Bewegung in Längsrichtung zum ersten Längsende des Aufnahmebereichs hin. Entsprechend ist die Fahrrinne als Krafteinleitungseinrichtung ausgebildet, die auf den Halteabschnitt eine Kraft in Längsrichtung zum ersten Längsende des Aufnahmebereichs hin ausübt. Die Fahrrinne kann somit die Krafteileitungseinrichtung des Systems bzw. der Station ausbilden oder zumindest einen Teil der Krafteinleitungseinrichtung. Besonders bevorzugt befindet sich die Fixiereinrichtung in dem geschlossenen Zustand, wenn sich das Rad in der Fahrrinne der Fixiereinrichtung befindet. Das Vorsehen des Steigungsabschnitts ermöglicht es, die Fixiereinrichtung gezielt so auszugestalten, dass durch Steigungsabschnitt und anschließenden Gefälleabschnitt einem Nutzer auf einfache Weise die Möglichkeit gegeben wird, fühlbar das Fahrzeug an der Station anzuschließen. Darüber hinaus kann durch das Vorsehen von Steigungsabschnitt und in Gefällerichtung sich daran anschließenden Gefälleabschnitt auf einfache Weise eine Ausgestaltung der Station als Vorrichtung ermöglichen, die für sich genommen ein hinreichendes Gefälle in dem Gefälleabschnitt aufweist.

In einer Ausführungsform weist die Fahrrinne einen Querschnitt senkrecht zur Längsrichtung nach Art eines V auf, dessen Schenkel sich von einem mittleren Basisbereich aus nach außen hin vertikal nach oben erstrecken. Die Mitte der V-Form ist somit eine Mitte senkrecht zur Längsrichtung, insbesondere eine Mitte mit Bezug auf die Transversalrichtung, und die Schenkel des V erstrecken sich von dieser Mitte weg nach außen, wobei sie sich in ihrem Erstreckungsverlauf von der Mitte nach außen vertikal nach oben hin erstrecken. Selbstverständlich kann die V-Form in Ausführungsformen im mittleren Basisbereich als in der Transversalrichtung und somit ohne Schräge oder insbesondere auch konvex ausgebildet sein, insbesondere über eine Erstreckung von mindestens 4 cm, insbesondere mindestens 6 cm in Transversalrichtung, da der mittlere Basisbereich lediglich dem Zweck der Unterstützung des Rads zur leichten Verfahrbarkeit des Rads auf der Fahrrinne dient, wobei die Schenkel ausgehend von dem ihnen jeweils zugeordneten Transversalende des mittleren Basisbereichs aus sich nach außen hin vertikal nach oben erstrecken und dem Zweck einer seitlichen Führung des Rads dienen. Besonders bevorzugt bilden die Schenkel zueinander einen Winkel, der zumindest längsabschnittsweise entlang der Gefällerichtung abnimmt, so dass die V-Form entlang der Gefällerichtung zunehmend enger wird. Bevorzugt wird dabei auf den gemittelten Verlauf der Schenkel von dem Basisbereich zu ihrem jeweiligen oberen Ende abgestellt. Die Ausgestaltung der Fahrrinne mit einem Querschnitt senkrecht zur Längsrichtung nach Art eines V bringt den besonderen Vorteil mit sich, dass das Rad des Fahrzeugs durch die Fahrrinne senkrecht zur Längsrichtung in eine vordefinierte Position gezwungen wird. Durch die Kombination des Gefälles, das das Rad in eine vordefinierte Position entlang der Längsrichtung zwingt, und die Ausgestaltung des Querschnitts nach Art eines V kann somit die Position des Rads des Fahrzeugs und somit die Position des Halteabschnitts im Aufnahmebereich besonders effektiv vorgegeben werden. Bei der besonders bevorzugten Ausführungsform, bei der der zwischen den Schenkeln gebildete Winkel entlang der Gefällerichtung zumindest längsabschnittsweise abnimmt, wird ermöglicht, dass ein Fahrzeug von einem Nutzer zunächst auf einfache Weise in die Fahrrinne entlang der Längsrichtung eingeführt werden kann und sodann die Fahrrinne die Führung des Rades in eine gezielte Endposition übernimmt. Besonders bevorzugt weisen die Schenkel an ihrem oberen Ende einen Maximalabstand, bezogen auf ein Maximum entlang der Längsrichtung, auf, der mindestens 7 cm beträgt. Bevorzugt laufen die Schenkel zumindest so lange längsabschnittsweise, und somit über einen Längsabschnitt hinweg, ununterbrochen schräg aufeinander zu, bis sie einen Abstand von weniger als 7 cm aufweisen, selbstverständlich ebenfalls mit Bezug auf ihre oberen Enden. Hierdurch kann ein besonders gezieltes Führen des Rades des Fahrzeugs zum besonders gezielten Positionieren des Halteabschnitts ermöglicht sein.

In einer Ausführungsform ist der Aufnahmebereich an seinen Vertikalenden, durch die er in einer senkrecht zur Transversalrichtung und senkrecht zur Längsrichtung verlaufenden Vertikalrichtung begrenzt ist, offen, wobei der Aufnahmebereich zur Aufnahme einer entlang der Vertikalrichtung verlaufenden Lenkstange des Fahrzeugs eingerichtet ist. Die Lenkstange kann dabei mit einem Winkel zur Vertikalrichtung verlaufen, sich jedoch in jedem Fall an dem oberen und unteren Vertikalende des Aufnahmebereichs aus dem Aufnahmebereich hinaus erstrecken. Dies kann ein besonders einfaches Fixieren eines Fahrzeugs, insbesondere eines Zweirads mit seiner Lenkstange, an der Halterung ermöglichen und darüber hinaus ein besonders einfaches Festlegen der Beweglichkeit des Halteabschnitts, der durch die Lenkstange ausgebildet ist, in dem Aufnahmebereich durch die Fixiereinrichtung. Die Lenkstange ist dabei die Stange des Fahrzeugs, die sich oberhalb des Vorderrads erstreckt und in der der Lenkmechanismus zum Lenken des Vorderrads eingerichtet ist, wobei die Lenkstange bevorzugt als Lenkrohr ausgebildet ist. Besonders bevorzugt weist der Aufnahmebereich einen Querschnitt senkrecht zur Vertikalrichtung nach Art eines U auf, wobei das U an einem ersten Längsende seinen Boden aufweist und an einem zweiten Längsende offen ist. Erstes und zweites Längsende sind dabei Längsenden des Aufnahmebereichs in dem offenen Zustand der Fixiereinrichtung. Die Fixiereinrichtung weist ferner ein Schließelement auf, das in dem geschlossenen Zustand das offene Längsende des U verschließt. Das Schließelement kann einteilig oder mehrteilig ausgebildet sein. Das Schließelement bildet somit eine Begrenzung des Aufnahmebereichs an seinem zweiten Längsende in dem geschlossenen Zustand aus und begrenzt dadurch die Beweglichkeit des Halteabschnitts zwischen dem Boden des U des Aufnahmebereichs und dem Schließelement in Längsrichtung. Besonders bevorzugt ist das Schließelement entlang der Längsrichtung beweglich gelagert und dazu ausgebildet, sich bei einem Übergang der Fixiereinrichtung von dem offenen Zustand in den geschlossenen Zustand in Längsrichtung zum Boden des U hin zubewegen. Beispielsweise kann das Fixierelement ein Bauteil nach Art einer Drehscheibe umfassen, insbesondere exzentrischen Drehscheibe, die eine Öffnung aufweist und die sich zur Realisierung des geschlossenen Zustands ausgehend von dem offenen Zustand um eine Drehachse dreht, wobei während der Drehung sich die Öffnung der Fixiereinrichtung und somit zumindest ein Abschnitt der Fixiereinrichtung in Längsrichtung auf den Boden des U zubewegt. Die Fixiereinrichtung kann beispielsweise auch einen Bolzen, insbesondere kreisbogenabschnittsförmig gestalteten Bolzen, umfassen, der ausgehend von dem offenen Zustand verschwenkt wird, bis er das offene Ende des U verschließt, und insbesondere anschließend in Längsrichtung weiter auf den Boden des U zubewegt wird, wobei insbesondere an den transversalen Seitenwänden, die den Aufnahmebereich begrenzen, eine in Längsrichtung verlaufende Führung des Bolzens vorgesehen sein kann. Besonders bevorzugt weist die Fixiereinrichtung eine Federeinrichtung auf, die das Schließelement mit einer auf das Schließelement in Längsrichtung zum U-Boden hin wirkenden Federkraft beaufschlagt. Die Federeinrichtung wirkt somit darauf hin, dass das Schließelement die beschriebene Bewegung in Längsrichtung auf den U-Boden hin ausführt. Beispielsweise kann die Fixiereinrichtung einen Schließmechanismus umfassen, insbesondere einen elektronischen oder elektromechanischen Schließmechanismus, beispielsweise durch einen Elektromagneten realisiert, der das Schließelement in dem offenen Zustand der Fixiereinrichtung mit einer Kraft belastet, die der Federkraft der Federeinrichtung entgegenwirkt, die diese auf das Schließelement ausübt, wobei zum Übergang von dem offenen Zustand in den geschlossenen Zustand der Fixiereinrichtung die Kraft des Schließmechanismus aufgehoben wird, beispielsweise durch elektrische Schaltung des Schließmechanismus, so dass die Federeinrichtung mit ihrer Federkraft auf das Schließelement wirken kann zum Realisieren des geschlossenen Zustands.

In einer Ausführungsform ist die Halterung dazu ausgebildet, einen Lenkstangenabschnitt einer jedweden Lenkstange als Halteabschnitt in den Aufnahmebereich aufzunehmen, die einen beliebigen Durchmesser zwischen 3 cm und 6 cm aufweist und einen beliebigen Winkel zwischen zumindest 75° bis 85°, insbesondere zwischen 70° und 87°, insbesondere zwischen 65° und 90° zur Längsrichtung aufweist, wobei die Fixiereinrichtung der Halterung dazu ausgebildet ist, bei in dem Aufnahmebereich als Halteabschnitt aufgenommenem Lenkstangenabschnitt den geschlossenen und den offenen Zustand einzunehmen und zwischen diesen Zuständen reversibel zu wechseln. Der Aufnahmebereich weist somit eine solche Dimensionierung auf, dass jedwede Lenkstange, insbesondere zylindrische Lenkstange, die in ihrem Halteabschnitt einen Durchmesser im erläuterten Bereich und einen Verlauf zur Längsrichtung im erläuterten Winkelbereich aufweist, in dem Aufnahmebereich anordenbar ist und bei in dem Aufnahmebereich angeordnetem Halteabschnitt die Fixiereinrichtung reversibel zwischen offenem und geschlossenem Zustand wechseln kann. Dies kann beispielsweise durch Gestaltung des Aufnahmebereichs mit einem hinreichenden Abstand seiner Transversalseitenwände und einer hinreichenden Längserstreckung zwischen seinen beiden Längsenden gewährleistet sein, wobei die Fixiereinrichtung zur Beschränkung der Beweglichkeit des Halteabschnitts eine entsprechende Beweglichkeit aufweisen kann, insbesondere eine entsprechende Beweglichkeit entlang der Längsrichtung wie oben erläutert. Insbesondere kann hierzu vorgesehen sein, dass die Fixiereinrichtung eine Federeinrichtung aufweist, die ein Schließelement der Fixiereinrichtung mit einer Federkraft beaufschlagt, die auf eine Bewegung des Schließelements von dem zweiten Längsende des Aufnahmebereichs, durch das er im offenen Zustand begrenzt ist, zur Mitte des Aufnahmebereichs hin hinwirkt, insbesondere auf eine Bewegung des Schließelements ausgehend von dem offenen Zustand von dem zweiten Längsende zum ersten Längsende des Aufnahmebereichs hin.

Besonders bevorzugt ist die Fixiereinrichtung elektronisch betätigbar, so dass über eine elektronische Schaltung zwischen dem offenen und dem geschlossenen Zustand der Fixiereinrichtung gewechselt werden kann und somit die Fixiereinrichtung elektronisch gesteuert zwischen ihrem offenen Zustand und ihrem geschlossenen Zustand wechseln kann. Besonders bevorzugt ist die Fixiereinrichtung dazu ausgebildet, bei Erkennung der Aufnahme eines Abschnitts des Halteabschnitts des Fahrzeugs in den Aufnahmebereich automatisch den geschlossenen Zustand einzunehmen und erst auf einen elektronischen Öffnungsbefehl hin ausgehend von dem geschlossenen Zustand den offenen Zustand einzunehmen. Das Erkennen kann beispielsweise durch Kommunikation zwischen Kommunikationsvorrichtung und Kommunikationseinrichtung oder durch einen mechanischen Automatismus, z. B. ein mechanisch ausgelöstes Einschnappen, erfolgen. Durch die elektronische Schaltung der Fixiereinrichtung, insbesondere durch das automatische Erkennen der Aufnahme des Abschnitts des Halteabschnitts des Fahrzeugs in dem Aufnahmebereich und das entsprechend automatisch und elektronisch gesteuerte Einnehmen des geschlossenen Zustands ist es besonders zuverlässig ermöglicht, dass ein Fahrzeug in einem gewünschten Parkzustand an der Station durch die Fixiereinrichtung gehalten ist, in dem die Batterie des Fahrzeugs über den Adapter und die Ladeeinrichtung der Station geladen werden kann. Durch die Ausgestaltung der Fixiereinrichtung dergestalt, dass sie erst auf einen elektronischen Öffnungsbefehl hin ausgehend von dem geschlossenen Zustand den offenen Zustand einnimmt, kann eine Diebstahl- bzw. Missbrauchsvorbeugung gewährleistet sein, und hierdurch kann eine gezielt nutzungsabhängige Erhebung einer Nutzungsgebühr des Fahrzeugs ermöglicht sein.

In einer Ausführungsform weist die Station als eine weitere elektronische Komponente eine drahtlose Kommunikationseinrichtung auf, die korrespondierend zu einer von dem Adapter ausgebildeten drahtlosen Kommunikationsvorrichtung ausgebildet ist zum Ermöglichen eines Datenaustauschs zwischen Adapter und Station. Die elektronische Komponente der Station umfasst somit bevorzugt die Ladeeinrichtung und die Kommunikationseinrichtung. Kommunikationseinrichtung und Kommunikationsvorrichtung können auf den Fachmann geläufige Weise ausgestaltet sein, beispielsweise als NFC-Kommunikationseinrichtungen, Bluetooth-Kommunikationseinrichtungen oder als RFID-Chip und zugeordneter Ausleseeinrichtung der Station bzw. - vorrichtung des Adapters. Besonders bevorzugt sind Kommunikationseinrichtung und Kommunikationsvorrichtung zum Gewährleisten einer bidirektionalen Kommunikation ausgebildet, insbesondere über NFC- oder Bluetooth-Kommunikation. Das Vorsehen von korrespondierenden Kommunikationseinrichtung und Kommunikationsvorrichtung kann besonders vorteilhaft sein für einen Kommunikationsaustausch zwischen Fahrzeug und Station, insbesondere zum Gewährleisten einer Erkennung des Fahrzeugs durch die Station oder einem Erkennen der Station durch das Fahrzeug. Hierdurch kann beispielsweise gewährleistet sein, dass nur solche Fahrzeuge an der Station angeschlossen werden können und durch die Station aufgeladen werden können, die entsprechend registriert sind und gegenüber denen somit eine entsprechende Nutzungsgebühr erhoben werden kann. Allgemein ist besonders bevorzugt die Fixiereinrichtung dazu ausgebildet, nach Erkennung einer Authentifizierung des Adapters mittels ihrer Kommunikationsvorrichtung den geschlossen Zustand einzunehmen. Die Authentifizierung kann beispielsweise eine Übermittlung eines Codes oder das Auslesen eines Codes umfassen, wobei in einer der Station zugeordneten Speichereinrichtung eine Information zu dem jeweiligen Code hinterlegt ist.

Allgemein ist bevorzugt die Sendespule der Station um weniger 1 cm, insbesondere weniger als 5 mm, insbesondere weniger als 3 mm, insbesondere nicht von zumindest einer Begrenzung des Aufnahmebereichs beabstandet, wobei auf eine Begrenzung abgestellt ist, die unmittelbar an den Aufnahmebereich und somit den von dem Aufnahmebereich gebildeten Raum anliegt und diesen begrenzt, in dem der Halteabschnitt des Fahrzeugs anordenbar ist. Hierdurch kann besonders zuverlässig eine Energieübertragung mit hoher Effizienz zwischen Ladeeinrichtung und Ladevorrichtung gewährleistet sein, und die Sendespule, insbesondere die elektronische Komponente der Station, kann durch entsprechende Integration in die Halterung auf einfache Weise robust geschützt sein. Denn die Position des Aufnahmebereichs relativ zum Halteabschnitt des Fahrzeugs ist in dem geschlossenen Zustand der Fixiereinrichtung sehr präzise vorgegeben, und die Halterung muss ohnehin eine zum Halten erforderliche Robustheit aufweisen. Entsprechend ist es ermöglicht, an dem Fahrzeug in unmittelbarer Nähe zum Halteabschnitt die elektronische Komponente, insbesondere Ladevorrichtung und/oder Kommunikationsvorrichtung vorzusehen, so dass ein Datenaustausch bzw. Energieaustausch zwischen Kommunikationseinrichtung und Kommunikationsvorrichtung bzw. Ladeeinrichtung und Ladevorrichtung sichergestellt sein kann. Allgemein sind dabei bevorzugt die Kommunikationseinrichtung und die Kommunikationsvorrichtung sowie die Ladeeinrichtung und die Ladevorrichtung dergestalt zueinander korrespondierend ausgebildet, dass ein Datenaustausch zwischen Kommunikationseinrichtung und Kommunikationsvorrichtung innerhalb eines Abstandsbereichs zwischen Kommunikationseinrichtung und Kommunikationsvorrichtung erfolgen kann, dessen Maximalwert größer ist als der Maximalwert des Abstandsbereichs zwischen Ladeeinrichtung und Ladevorrichtung, innerhalb dessen diese beiden zueinander angeordnet sein müssen, damit eine Übertragung von elektrischer Energie zwischen Ladevorrichtung und Ladeeinrichtung mit einer Effizienz von mehr als 70 %, insbesondere mehr als 80 % erfolgen kann. Allgemein umfasst die Station bevorzugt eine Recheneinheit und einen Speicher, über die eine Ansteuerung von Ladeeinrichtung und/oder Kommunikationseinrichtung in einem Betriebszustand der Station erfolgt. Allgemein ist bevorzugt die Station dazu ausgebildet, über ihre Ladeeinrichtung einen Abstand einer korrespondierenden Ladevorrichtung zu ermitteln, beispielsweise indem durch in die Sendespule abgegebene Energieimpulse die Rückkopplung mit einer korrespondierenden Empfängerspule einer korrespondierenden Ladevorrichtung ermittelt wird. Allgemein ist besonders bevorzugt die Station dazu ausgebildet, über ihre Sendespule nur dann über einen Zeitraum von mehr als 5 Minuten Energie abzugeben, wenn die Station zuvor über ihre Recheneinheit festgestellt hat, dass sich eine korrespondierende Ladevorrichtung mit einer korrespondierenden Empfängerspule in einem vorbestimmten Abstandsbereich zur Sendespule befindet, insbesondere in einem vorbestimmten Abstandsbereich mit einer vorbestimmten Ausrichtung, wobei diese Feststellung beispielsweise über die genannten Energieimpulse in der Sendespule oder über Auslesen von Informationen aus der Kommunikationsvorrichtung durch die Kommunikationseinrichtung erfolgen kann.

Allgemein ist bevorzugt ein Wicklungsverhältnis zwischen der Sendespule der Ladeeinrichtung und der Empfängerspule der Ladevorrichtung vorgesehen, das einen Wert von mindestens als 1:1, insbesondere von mindestens 1,5:1, insbesondere von mindestens 2:1, insbesondere zwischen 1,5:1 und 5:1 aufweist. Hierdurch kann eine Heruntertransformierung der Betriebsspannung, mit der die Sendespule versorgt wird, zu der Betriebsspannung, die von der Empfängerspule abgegeben wird, erfolgen. Darüber hinaus kann hierdurch gewährleistet sein, dass die Sendespule mit einer hohen Spannung versorgt werden kann, was für die Energieübertragung vorteilhaft ist, insbesondere mit Bezug auf die erforderlichen Ströme, die durch die Sendespule fließen, und mit Bezug auf den Abstand zwischen Empfängerspule und Sendespule, innerhalb dessen noch mit einer hohen Effizienz eine Energieübertragung von der Sendespule auf die Empfängerspule erfolgen kann. Besonders bevorzugt ist die Ladeeinrichtung dazu ausgebildet, die Sendespule mit einer Betriebsspannung von über 200 V, insbesondere von über 300 V, insbesondere von mindestens 400 V zur Durchführung der Übertragung der elektrischen Energie zu beaufschlagen, wobei die Ladevorrichtung während dieser Übertragung der elektrischen Energie zum Ausgeben einer Ladespannung von weniger als 60 V ausgebildet ist. Besonders bevorzugt ist während dieser Übertragung die Empfängerspule dazu ausgebildet, eine Spannung von weniger als 100 V auszugeben. Hierdurch kann eine effiziente Energieübertragung gewährleistet sein und gleichzeitig gewährleistet sein, dass in dem Fahrzeug nur eine elektrische Spannung in einem für einen Menschen ungefährlichen Bereich erzeugt wird.

Besonders bevorzugt weist die Sendespule eine Querschnittsfläche auf, d. h. die Fläche ihres Querschnitts senkrecht zu ihrer Spulenachse, die mindestens so groß ist wie eine Querschnittsfläche der Empfängerspule, insbesondere größer ist als eine Querschnittsfläche der Empfängerspule, d. h. die Fläche des Querschnitts der Empfängerspule senkrecht zu ihrer Spulenachse, wobei die Querschnittsfläche der Sendespule bevorzugt mindestens das 1,5-Fache der Querschnittsfläche der Empfängerspule beträgt. Allgemein sind bevorzugt Sendespule und Empfängerspule nach Art eines Zylinders, insbesondere eines runden Zylinders ausgestaltet. Die Erfinder haben erkannt, dass durch das Vorsehen einer größeren Querschnittsfläche der Sendespule als der Empfängerspule der Positionstoleranzbereich, innerhalb dessen eine Energieübertragung mit einer hohen Effizienz von der Sendespule auf die Empfängerspule erfolgen kann, eine besonders vorteilhafte Größe aufweisen kann. Besonders bevorzugt weisen Sendespule und Empfängerspule jeweils eine Querschnittsfläche von mehr als 8 cm², insbesondere mehr als 10 cm², insbesondere mehr als 15 cm² auf.

Besonders bevorzugt ist die Ladeeinrichtung dazu eingerichtet, die Sendespule zur Übertragung von elektrischer Energie in einer Betriebsfrequenz zu betreiben, die darauf abgestimmt ist, bei einer parallelen, mit einem Abstand von 1,5 cm beabstandeten Ausrichtung von Sende- und Empfängerspule, bei der Spulenzentren der beiden Spulen zueinander fluchtend ausgerichtet sind, die elektrische Energie mit einem Wirkungsgrad von mindestens 90 % zu übertragen. Bei dieser bevorzugten Ausführungsform ist die Ladeeinrichtung somit gezielt dazu eingerichtet, dass elektrische Energie mit einer hohen Effizienz zur Sendespule der korrespondierenden Ladevorrichtung übertragen werden kann, wenn die Spulenachsen von Empfängerspule und Sendespule zueinander fluchtend und zueinander parallel ausgerichtet sind, wobei die Spulenachsen jeweils durch die Spulenzentren der Spulen verlaufen, und wobei Sende- und Empfängerspule entlang der durch ihre Spulenachsen vorgegebenen Richtung mit einem Abstand von 1,5 cm zueinander beabstandet sind. Dem Fachmann ist geläufig, die entsprechenden Schaltkreise von Ladevorrichtung und Ladeeinrichtung aufeinander abzustimmen. Allgemein ist bevorzugt in der Ladeeinrichtung ein erster Kondensator in Serie zu der Sendespule geschaltet und in der Ladevorrichtung ein zweiter Kondensator in Serie zu der Empfängerspule geschaltet. Dies kann für das Auswählen einer Betriebsfrequenz zum Betreiben der Sendespule zum Gewährleisten einer Energieübertragung mit einer hohen Effizienz in einem großen Abstandsbereich besonders vorteilhaft sein. Besonders bevorzugt weist der erste Kondensator eine erste Kapazität auf, und weist der zweite Kondensator eine zweite Kapazität auf, wobei die erste Kapazität größer als die zweite Kapazität ist. Besonders bevorzugt beträgt die erste Kapazität mindestens das 1,5-Fache der zweiten Kapazität. Hierdurch kann eine besonders gute Kopplung und effiziente Energieübertragung von der Sendespule zu der Empfängerspule bei einem großen Abstand, insbesondere einem Abstand von über 1 cm, zwischen Sende- und Empfängerspule gewährleistet sein. Allgemein beträgt die erste Kapazität C1 bevorzugt mindestens das 1,5-Fache, insbesondere mindestens das 2-Fache des Werts, der sich aus der Multiplikation der zweiten Kapazität C2 mit dem Quadrat des Verhältnisses von Windungszahl N2 der Empfängerspule zu Windungszahl N1 der Sendespule ergibt: C1 ≥ 1,5 * (N2:N1)² * C2, insbesondere C1 ≥ 2 * (N2:N1)² * C2. Allgemein sind bevorzugt Ladeeinrichtung und Ladevorrichtung dazu ausgebildet, eine Energieübertragung von der Sendespule zu der Empfängerspule mit einem Wirkungsgrad von mindestens 90 % zu gewährleisten, bei der die Energie mit einer Übertragungsleistung von mindestens 40 W, insbesondere mindestens 60 W, insbesondere mindestens 100 W, insbesondere in dem genannten Abstand bzw. Abstandsbereich, übertragen wird.

Allgemein umfasst das System bevorzugt das Fahrzeug, wobei der Adapter an dem Fahrzeug montiert ist. Besonders bevorzugt umfasst das System unterschiedliche Fahrzeuge, an denen jeweils der Adapter montiert ist, wobei sich die Fahrzeuge zumindest in ihrer geometrischen Gestalt unterscheiden, wobei in einem Parkzustand des jeweiligen Fahrzeugs, in dem der Halteabschnitt des jeweiligen Fahrzeugs sich in dem Aufnahmebereich der Station befindet und sich die Fixiereinrichtung in ihrem geschlossenen Zustand befindet, der Adapter dergestalt an dem jeweiligen Fahrzeug positionsfest fixiert ist, dass er einen Abstand von weniger als 2 cm, insbesondere weniger als 1 cm zu der Sendespule der Ladeeinrichtung der Station aufweist. Besonders bevorzugt handelt es sich bei dem Fahrzeug um ein Zweirad, wobei der Adapter an der Lenkstange des Fahrzeugs montiert ist. Allgemein umfasst bevorzugt das zumindest eine Fahrzeug, insbesondere sämtliche Fahrzeuge des Systems, eine Steuereinrichtung und eine Bedieneinrichtung, wobei die Steuereinrichtung in einem Fahrbereitschaftsbetriebszustand dazu ausgebildet ist, in Abhängigkeit von einer Betätigung der Bedieneinrichtung den elektrischen Antrieb zum Antreiben des Fahrzeugs anzusteuern, und in einem Sperrbetriebszustand dazu ausgebildet ist, ein Antreiben des Fahrzeugs mittels des elektronischen Antriebs durch Betätigen der Bedieneinrichtung zu verhindern. In dem Fahrbereitschaftsbetriebszustand ermöglicht die Steuereinrichtung somit ein Antreiben des Fahrzeugs, indem ein Nutzer über die Bedieneinrichtung einen Antriebsbefehl an die Steuereinrichtung abgibt, wobei die Steuereinrichtung diesen Antriebsbefehl in eine elektrische Ansteuerung des elektrischen Antriebs zum Antreiben des Fahrzeugs umsetzt. Im Sperrbetriebszustand hingegen steuert die Steuereinrichtung bei einer entsprechenden Betätigung der Bedieneinrichtung, über die ein Antriebsbefehl an die Steuereinrichtung abgegeben wird, den elektrischen Antrieb nicht zum Antreiben des Fahrzeugs an, so dass ein Nutzer durch Betätigung der Bedieneinrichtung den elektrischen Antrieb nicht für ein Antreiben des Fahrzeugs verwenden kann. Besonders bevorzugt ist die Steuereinrichtung dazu ausgebildet, unabhängig von dem Zustand der Fixiereinrichtung eine Authentifizierung eines Nutzers über eine von dem Adapter umfasste Kommunikationsvorrichtung zu erkennen, während sie sich in dem Sperrbetriebszustand befindet, und auf das Erkennen der Authentifizierung hin ohne Einflussnahme auf den Zustand und unabhängig von dem Zustand der Fixiereinrichtung den Fahrbereitschaftsbetriebszustand einzunehmen. Die Steuereinrichtung ist dabei bevorzugt dazu ausgebildet, in dem eingenommenen Fahrbereitschaftsbetriebszustand den elektrischen Antrieb während einer Fahrt anzusteuern, bis sie wieder den Sperrbetriebszustand einnimmt.

Selbstverständlich umfasst die Erfindung dabei auch Ausführungsformen, bei der die Steuereinrichtung auch Einfluss auf die Fixiereinrichtung in Abhängigkeit von der Authentifizierung eines Nutzers nehmen kann. Bei der beschriebenen Ausführungsform ist jedoch jedenfalls die Steuereinrichtung dazu eingerichtet, in dem Sperrbetriebszustand auch unabhängig von dem Zustand einer Fixiereinrichtung einer Station des Systems eine Authentifizierung eines Nutzers zu erkennen und unabhängig von der Fixiereinrichtung und somit ohne Einflussnahme auf einen Zustand der Fixiereinrichtung den Fahrbereitschaftsbetriebszustand einzunehmen, in dem sie dann den elektrischen Antrieb während einer Fahrt ansteuern kann. Die beschriebene Ausführungsform bringt den besonderen Vorteil mit sich, dass ein Fahrzeug auch dann zwischen Sperrbetriebszustand und Fahrtbereitschaftszustand wechseln kann, wenn es nicht an einer Station gehalten ist, während die Fixiereinrichtung der Station ihren geschlossenen Zustand einnimmt. Dies kann eine Verwendung des Fahrzeugs durch einen Nutzer unabhängig von der Station ermöglichen. Besonders bevorzugt ist die Steuereinrichtung dazu ausgebildet, nach der Fahrt über ihre Kommunikationsvorrichtung mit einer Kommunikationseinrichtung der Station mittels eines Datenaustauschs zu kommunizieren, während sich die Fixiereinrichtung in ihrem geschlossen Zustand befindet, wobei das System eine Steuerung aufweist, die dazu ausgebildet ist, den Datenaustausch auszulesen und in Abhängigkeit von dem Datenaustausch eine Buchung auf einem Nutzerkonto des authentifizierten Nutzers zu tätigen. Bei dieser besonders bevorzugten Ausführungsform kann somit zum einen ein Fahrzeug unabhängig davon, ob es an einer Station angeschlossen ist, von einem Nutzer verwendet werden, wobei es bis zum Beginn der Nutzung durch den Sperrbetriebszustand vor Missbrauch geschützt ist, wohingegen das System über die Steuerung erkennen kann, dass das Fahrzeug nach der Benutzung, die unabhängig von einer Station begonnen hat, an einer Station angeschlossen ist, während sich die Fixiereinrichtung in ihrem geschlossen Zustand befindet, so dass in Abhängigkeit von dieser Erkennung eine Buchung auf einem Nutzerkonto des authentifizierten Nutzers erfolgen kann. Der Datenaustausch kann beispielsweise die Übermittlung der später erläuterten Fahrtstart- und Fahrtendewerte und/oder von anderen Nutzungsinformationen, wie beispielsweise Pfandbelastungs- und Pfandgutschriftinformation und/oder diese charakterisierende Parameter umfassen. Fahrtstart- und Fahrtendewert können dabei allgemein bevorzugt ortsabhängig, zeitabhängig und/oder batterieladezustandsabhängig sein, damit anhand dieser Werte eine nutzungsabhängige Belastung eines Nutzerkontos erfolgen kann, beispielsweise abhängig von der gefahrenen Strecke (durch ortsabhängige Werte), von der Dauer der durchgeführten Fahrt (durch zeitabhängige Werte) oder von der bei der Fahrt verbrauchten Energie (durch batterieladezustandsabhängige Werte). Selbstverständlich können Kommunikationseinrichtung und Kommunikationsvorrichtung Merkmale aufweisen, die an anderer Stelle im Zusammenhang mit möglichen Ausgestaltungen von Kommunikationseinrichtung und Kommunikationsvorrichtung beschrieben sind.

Vorliegend offenbart ist ferner eine Station zum Laden und zum Halten eines batteriegetriebenen Fahrzeugs, insbesondere eine Station eines vorliegend offenbarten Systems. Die Station umfasst eine Halterung zur Aufnahme eines Halteabschnitts des Fahrzeugs und eine induktive Ladeeinrichtung, deren Position relativ zu der Halterung in der Station festgelegt ist. Die Halterung umfasst eine Fixiereinrichtung, die in einem verschlossenen Zustand zum Verhindern eines Entnehmens des Halteabschnitts von der Halterung ausgebildet ist und die in einem offenen Zustand zum Freigeben des Halteabschnitts ausgebildet ist, wobei die Halterung einen Aufnahmebereich aufweist, der an seinen beiden ihn in einer Transversalrichtung begrenzenden Transversalenden durch transversale Seitenwände begrenzt ist und an einem ersten ihn in einer senkrecht zur Transversalrichtung verlaufenden Längsrichtung begrenzenden Längsende durch eine Längsseitenwand begrenzt ist und an seinem dem ersten gegenüberliegenden zweiten Längsende offen ist zum Ermöglichen eines Einschiebens des Halteabschnitts in den Aufnahmebereich ausgehend von dem zweiten Längsende. Die Station kann in verschiedenen Ausführungsformen Merkmale aufweisen, die mit Bezug auf die Station von verschiedenen Ausführungsformen eines vorliegend offenbarten Systems erläutert sind. Allgemein steht bevorzugt die Vertikalrichtung, insbesondere auch betreffend die oben erläuterten Ausführungsformen eines vorliegend offenbarten Systems, senkrecht auf Transversalrichtung und auf Längsrichtung. Bevorzugt erstreckt sich der Aufnahmebereich zwischen seinen Längsenden in Längsrichtung über mindestens 3 cm, insbesondere mindestens 5 cm. Bevorzugt weist die Ladeeinrichtung eine Sendespule mit einer Querschnittsfläche von mindestens 8 cm² auf, insbesondere mindestens 10 cm², insbesondere mindestens 15 cm². Besonders bevorzugt ist die Fixiereinrichtung dazu ausgebildet, in dem geschlossenen Zustand eine Beweglichkeit des Halteabschnitts, insbesondere durch Vorsehen von Begrenzungen des Aufnahmebereichs an seinen beiden Transversalenden und an seinem ersten Längsende, und durch Vorsehen einer Begrenzung an seinem zweiten Längsende und/oder dem Vorsehen einer Krafteinleitungseinrichtung, die in dem geschlossenen Zustand eine Kraft in Längsrichtung auf den Halteabschnitt zum ersten Längsende des Aufnahmebereichs hin ausübt, auf einen Haltetoleranzbereich festzulegen, der in seiner Transversalerstreckung und in seiner Längserstreckung festgelegt ist, wobei die Ladeeinrichtung dazu ausgebildet ist, eine Übertragung von elektrischer Energie zu einer korrespondierenden Ladevorrichtung innerhalb eines Positionstoleranzbereichs zu ermöglichen, der zumindest dieselbe transversale Erstreckung und dieselbe Längserstreckung wie der Haltetoleranzbereich aufweist.

In einer Ausführungsform weist die Station eine mit einem Datenspeicher verbundene Steuerung auf. Die Steuerung ist dazu ausgebildet, in dem Datenspeicher Nutzerkonten abzulegen, die jeweils als ersten Kontoparameter eine Nutzeridentifikationsinformation und als zweiten Kontoparameter eine Fahrzeugbetreiberinformation aufweisen. In einer Ausführungsform ist die Steuerung dazu ausgebildet, nur bei Erkennen einer Authentifizierung eines Nutzers mit seinem in dem Datenspeicher entsprechend angelegten Nutzerkonto, die Fixiereinrichtung zum Einnehmen des geschlossenen Zustands anzusteuern und Energie über die Ladeeinrichtung abzugeben. Besonders bevorzugt ist die Steuerung dazu ausgebildet, nur bei Erkennen einer Authentifizierung eines Nutzers mit einem in dem Datenspeicher dergestalt angelegten Nutzerkonto, dass der zweite Kontoparameter dieses Nutzerkontos mit einer der Station zugeordneten Fahrzeugbetreiberinformation übereinstimmt, die Fixiereinrichtung zum Einnehmen des geschlossenen Zustands anzusteuern und Energie über die Ladeeinrichtung abzugeben. Dies bringt den besonderen Vorteil mit sich, dass die Station über die Steuerung gesichert ist gegenüber einer unqualifizierten Benutzung. Diese besonders bevorzugte Ausführungsform bringt somit den Vorteil mit sich, dass über die Steuerung eine klare Parametrisierung von Nutzerkonten bezüglich Fahrzeugbetreiberinformation erfolgen kann, so dass qualifizierte Fahrzeugbetreiber ihre entsprechende Identifikation einem entsprechenden Nutzerkonto zuordnen können. Dies dient zum einen dem Sicherheitsaspekt, denn nur qualifizierte Fahrzeugbetreiber sind zur Nutzung der Station zugelassen. Zum anderen dient dies einer Vermeidung von Missbrauch der Station, beispielsweise durch nicht autorisiertes Laden. Darüber hinaus ermöglicht es dem Betreiber einer Station, gezielt Rechte an der Nutzung der Station zu vergeben. In einer besonders bevorzugten Ausführungsform ist die Steuerung dazu ausgebildet, die Anzahl der Authentifizierungen abzulegen. Hierüber kann ein Betreiber der Station beispielsweise einen Bedarf nach Wartung der Station erkennen. In einer Ausführungsform ist die Steuerung dazu ausgebildet, bei jeder Authentifizierung eine Fahrzeugidentifizierungsinformation des an der Station gehaltenen Fahrzeugs in dem Datenspeicher abzuspeichern. Diese Fahrzeugidentifizierungsinformation kann beispielsweise über die Kommunikationsvorrichtung des Fahrzeugs an die Kommunikationseinrichtung der Station und von dort in die Steuerung gelangen. Besonders bevorzugt ist die Steuerung dazu ausgebildet, die Anzahl der Authentifizierungen bezüglich einer jeden bestimmten Fahrzeugidentifizierungsinformation in dem Datenspeicher abzulegen. Hierdurch kann das Nutzungsverhalten bezüglich ausgewählter Fahrzeuge analysiert werden und beispielsweise eine rechtzeitige Wartung des Fahrzeugs nach hinreichend häufigem Gebrauch gewährleistet sein, was die Sicherheit und Fahrbereitschaft des Fahrzeugs verbessern kann.

Die vorliegend beanspruchte Erfindung betrifft ein Verfahren zum Betreiben eines Systems, insbesondere eines vorliegende offenbarten Systems, das ein batteriegetriebenes Fahrzeug mit einem elektrischen Antrieb und mehrere Stationen umfasst, gemäß den Merkmalen von Anspruch 1. In einem ersten Verfahrensschritt wird das Fahrzeug in einem ersten Parkzustand an einer Halterung einer ersten Station in einer festgelegten Position relativ zu der ersten Station gehalten, wobei durch eine Fixiereinrichtung der Halterung ein Lösen des Fahrzeugs von der Halterung verhindert wird und eine Batterie des Fahrzeugs geladen wird, insbesondere induktiv geladen wird, während das Fahrzeug im ersten Parkzustand relativ zu der ersten Station gehalten wird. In einem zweiten Verfahrensschritt wird ein erster Nutzer, dem ein erstes Nutzerkonto zugeordnet ist, durch eine erste Authentifizierung erkannt, wonach durch die Fixiereinrichtung der ersten Station das Fahrzeug freigegeben wird. Das Nutzerkonto ist dem Nutzer zugeordnet, indem ein auf den Nutzer bezogenes Nutzerkonto zuvor in einem Speicher angelegt wurde und dem Nutzerkonto in dem Speicher eine erste Authentifizierung zugeordnet wurde, über die der Nutzer und somit sein ihm zugeordnetes Nutzerkonto eindeutig authentifiziert werden kann. Ferner nimmt nach Erkennen durch die erste Authentifizierung die Steuereinrichtung des Fahrzeugs einen Fahrbereitschaftsbetriebszustand ein, in dem sie dazu ausgebildet ist, in Abhängigkeit von einer Betätigung einer Bedieneinrichtung des Fahrzeugs den elektrischen Antrieb zum Antreiben des Fahrzeugs anzusteuern. Ferner wird nach dem Erkennen des ersten Nutzers durch die erste Authentifizierung dem ersten Nutzerkonto als Nutzungsinformation eine Pfandbelastungsinformation und ein standort- und/oder zeitabhängiger und/oder batteriezustandsabhängiger Fahrtstartwert zugeordnet, insbesondere bevor oder spätestens wenn die Steuereinrichtung den elektrischen Antrieb zum Antreiben des Fahrzeugs ansteuert. In einem dritten Verfahrensschritt wird ein Fahrtendesignal empfangen. Das Fahrtendesignal kann beispielsweise durch die Steuereinrichtung des Fahrzeugs selbst ausgelöst werden, nachdem die Steuereinrichtung über ein vorbestimmtes Zeitintervall eine fehlende Betätigung der Bedieneinrichtung festgestellt hat. Das Fahrtendesignal kann beispielsweise durch die Bedieneinrichtung empfangen werden. Das Fahrtendesignal kann beispielsweise über drahtlose Kommunikation, insbesondere über eine Kommunikationsvorrichtung des Fahrzeugs empfangen werden, beispielsweise durch Kopplung der Kommunikationsvorrichtung mit einem Smartphone des Nutzers. Nach dem Empfangen des Fahrtendesignals nimmt die Steuereinrichtung des Fahrzeugs einen Sperrbetriebszustand ein, in dem sie dazu ausgebildet ist, ein Antreiben des Fahrzeugs mittels des elektrischen Antriebs durch Betätigen der Bedieneinrichtung zu verhindern. Ferner wird nach dem Empfangen des Fahrtendesignals dem ersten Nutzerkonto ein erster Fahrtendewert zugeordnet, der bevorzugt zeitabhängig, standardabhängig und/oder batterieladezustandsabhängig ist. Besonders bevorzugt wird dem ersten Nutzerkonto in Abhängigkeit von dem ersten Fahrtstartwert und von dem ersten Fahrtendewert eine Belastungsinformation zugeordnet. Die Belastungsinformation kann beispielsweise, ebenso wie die Pfandbelastungsinformation, eine Belastungsinformation des ersten Nutzerkontos betreffend einen zu belastenden Geldbetrag sein. Ferner wird nach dem Empfangen des ersten Fahrtendesignals geprüft, ob sich das Fahrzeug in einem zweiten Parkzustand befindet, in dem es an einer Halterung einer zweiten Station in einer festgelegten Position relativ zu der zweiten Station gehalten wird und dabei durch eine Fixiereinrichtung der Halterung der zweiten Station ein Lösen des Fahrzeugs von der Halterung der zweiten Station verhindert wird, wobei bevorzugt der zweite Parkzustand ferner dadurch definiert wird, dass eine Energieübertragung zwischen Ladeeinrichtung der zweiten Station und der Ladevorrichtung des Fahrzeugs erfolgt. Erste und zweite Station können wie zu vorliegend offenbarten Systemen bzw. zu einer vorliegend offenbarten Station in verschiedenen Ausführungsformen erläutert ausgebildet sein, insbesondere identisch ausgestaltet sein. Ferner ist es möglich, dass die zweite Station mit der ersten Station identisch ist. Die Prüfung, ob das Fahrzeug sich in dem zweiten Parkzustand befindet, kann beispielsweise über Ladeeinrichtung und Ladevorrichtung wie oben erläutert erfolgen, indem ein Abstand zwischen Ladeeinrichtung und Ladevorrichtung abgeschätzt wird. Beispielsweise kann die Überprüfung auch dadurch erfolgen, dass eine Kommunikationseinrichtung der Station mit einer Kommunikationsvorrichtung des Fahrzeugs kommuniziert, wodurch sich das Fahrzeug an der Station authentifizieren kann. In dem dritten Verfahrensschritt wird dem ersten Nutzerkonto nur dann eine Pfandrückgabeinformation zugeordnet, wenn festgestellt wird, dass sich das Fahrzeug in dem zweiten Parkzustand befindet. Anderenfalls bleibt die Pfandbelastungsinformation ohne entsprechende Pfandrückgabeinformation dem ersten Nutzerkonto zugeordnet. In einem auf den dritten Verfahrensschritt folgenden vierten Verfahrensschritt wird dann, wenn in dem dritten Verfahrensschritt festgestellt wird, dass sich das Fahrzeug nicht in dem zweiten Parkzustand befindet, ein zweiter Nutzer, dem ein zweites Nutzerkonto zugeordnet ist, durch eine zweite Authentifizierung erkannt, wonach die Steuereinrichtung des Fahrzeugs in den Fahrbereitschaftsbetriebszustand versetzt wird und dem zweiten Nutzerkonto als Nutzungsinformation ein standort- und/oder zeitabhängiger und/oder batterieladezustandsabhängiger zweiter Fahrtstartwert zugeordnet wird. Zweites Nutzerkonto und zweite Authentifizierung kann wie zu erstem Nutzerkonto und erster Authentifizierung erläutert vorgesehen sein. In einem fünften Verfahrensschritt, der auf den vierten Verfahrensschritt folgt, wird dem zweiten Nutzerkonto nur dann eine Pfandgutschrift zugeordnet, wenn festgestellt wird, dass das Fahrzeug sich in einem dritten Parkzustand befindet, in dem es an eine Halterung einer dritten Station in einer festgelegten Position relativ zu der dritten Station gehalten wird und von der dritten Station geladen wird. Diese Feststellung kann wie oben zum zweiten Parkzustand erläutert erfolgen, wobei der dritte Parkzustand ferner dadurch definiert wird, dass eine Energieübertragung zwischen Ladeeinrichtung der dritten Station und Ladevorrichtung des Fahrzeugs erfolgt. Die dritte Station kann wie oben zu der ersten und zweiten Station erläutert ausgebildet sein, insbesondere Merkmale einer vorliegend offenbarten Station bzw. Merkmale einer Station eines vorliegend offenbarten Systems in dem beschriebenen Ausführungsformen aufweisen. Die dritte Station kann auch mit der ersten Station identisch sein.

Das erfindungsgemäße Verfahren ermöglicht eine besonders effiziente Bereitstellung von batteriegetriebenen Fahrzeugen zur großflächigen Nutzung durch verschiedene Nutzer. Zum einen ist durch das Bereitstellen von Stationen, mit denen die Fahrzeuge geladen werden können, gewährleistet, dass energieeffizient und mit geringen Kosten die Batterien der Fahrzeuge hinreichend oft geladen werden, so dass die Fahrzeuge zur Nutzung zur Verfügung stehen. Zum anderen ist durch das Vorsehen von Fahrtbereitschaftsbetriebszustand und Sperrbetriebszustand und dem Vorsehen der Authentifizierungen und dem Erkennen der jeweiligen Parkzustände und dem Zuordnen einer Pfandbelastungsinformation bzw. Pfandgutschrift zu Nutzerkonten ein Anreiz gegeben, dass das Fahrzeug an eine Station gebracht wird, damit es aufgeladen werden kann, ohne dass ein Nutzer zwingend dazu verpflichtet ist, eine solche Station anzufahren, wenn er seine Fahrt beendet hat. Dies kann es einem Nutzer ermöglichen, unter Akzeptanz einer dauerhaften Belastung seines Nutzerkontos mit der Pfandbelastungsinformation ein Fahrzeug zu benutzen, ohne es in einen vordefinierten Parkzustand an einer Station abzustellen und dort laden zu lassen, wohingegen andere Nutzer wiederum die Möglichkeit haben, sich Pfandgutschriften zu Nutze zu machen, indem sie ein fern von einer Station abgestelltes Fahrzeug zu einer Station bringen.

Erfindungsgemäß wird in dem vierten Verfahrensschritt dem zweiten Nutzer als Information eine Gruppe an Sollstationen angezeigt. Das Anzeigen kann beispielsweise über ein Display an dem Fahrzeug erfolgen oder durch das Übermitteln von Informationen von einer Kommunikationsvorrichtung des Fahrzeugs zu einem mobilen Gerät des Nutzers, beispielsweise zu einem Smartphone. In dem fünften Verfahrensschritt wird dann dem zweiten Nutzerkonto die Pfandgutschrift nur gutgeschrieben, wenn die dritte Station der Gruppe an Sollstationen angehört. Hierdurch kann eine gewünschte Verteilung von Fahrzeugen durch Zuordnung von Stationen zu der Gruppe an Sollstationen erreicht werden. Erfindungsgemäß wird bei einer Feststellung, dass die dritte Station der Gruppe an Sollstationen nicht angehört, dem zweiten Nutzerkonto ein zweiter Fahrtendewert zugeordnet, wobei eine Belastungsinformation in Abhängigkeit von dem zweiten Fahrtstartwert und von dem zweiten Fahrtendewert dem zweiten Nutzerkonto zugeordnet wird. Entsprechend kann das zweite Nutzerkonto mit einer Gebühr belastet werden, die abhängig von dem zweiten Fahrtstartwert und von dem zweiten Fahrtendewert ist. In einer besonders bevorzugten Ausführungsform ist vorgesehen, dass in dem Fall, dass in dem fünften Verfahrensschritt festgestellt wird, dass die dritte Station der Gruppe an Sollstationen angehört und dem zweiten Nutzerkonto die Pfandgutschrift gutgeschrieben wird, dem zweiten Nutzerkonto keine Belastungsinformation in Abhängigkeit von zweitem Fahrtstartwert und zweitem Fahrtendewert zugeordnet, so dass der zweite Nutzer ohne Entrichtung einer Fahrtgebühr dafür sorgen kann, dass das Fahrzeug zu einer Station der Gruppe an Sollstationen gebracht wird und hierfür zusätzlich die Pfandrückgabeinformation als Gutschrift auf sein zweites Nutzerkonto erhält. Hierdurch kann ein Anreiz geschaffen werden, dass die Fahrzeuge besonders sinnvoll an gemäß einer gewünschten Verteilung, insbesondere automatisch ermittelten gewünschten Verteilung vorbestimmten Sollstationen gebracht werden und dort in einen entsprechenden Parkzustand gebracht werden und dort geladen werden, um nutzungsbereit zu sein.

In einer Ausführungsform wird im vierten Verfahrensschritt nach Erkennen der zweiten Authentifizierung dem zweiten Nutzerkonto eine zweite Pfandbelastungsinformation zugeordnet. Dies kann den besonderen Vorteil eines Anreizes für den zweiten Nutzer mit sich bringen, das Fahrzeug bei einer Station abzustellen. Besonders bevorzugt wird im fünften Verfahrensschritt dem zweiten Nutzerkonto als Pfandgutschrift eine der zweiten Pfandbelastungsinformation zugeordnete zweite Pfandgutschrift zugeordnet, so dass in dem Fall, dass festgestellt wird, dass sich das Fahrzeug in dem dritten Parkzustand befindet, die zweite Pfandgutschrift dem zweiten Nutzerkonto zugeschrieben wird. Besonders bevorzugt wird bei dem erfindungsgemäßen Verfahren im Falle des Feststellens, dass die dritte Station der oben erläuterten Gruppe an Sollstationen angehört, dem zweiten Nutzerkonto als Pfandgutschrift neben der zweiten Pfandgutschrift zusätzlich eine erste Pfandgutschrift zugeordnet, die der dem ersten Nutzerkonto im ersten Verfahrensschritt zugeordneten Pfandbelastungsinformation zugeordnet ist. Somit wird dem zweiten Nutzerkonto eine einfache Pfandgutschrift, nämlich die der zweiten Pfandbelastungsinformation zugeordnete zweite Pfandgutschrift, zugeschrieben, falls es sich bei der dritten Station um eine Station handelt, die nicht zu der Gruppe an Sollstationen zählt, wohingegen dem zweiten Nutzerkonto die erste und die zweite Pfandgutschrift zugeordnet werden, wenn es sich bei der dritten Station um eine Station der Gruppe an Sollstationen handelt. Hierdurch wird ein besonderer Anreiz gesetzt, dass ein Nutzer zum Geldverdienen ein Fahrzeug zu einer ausgewählten Station, nämlich einer Station der Gruppe an Sollstationen bringt, wohingegen andererseits auch jedem sonstigen zweiten Nutzer stets ein Anreiz gesetzt wird, das Fahrzeug an zumindest irgendeiner Station in dem dritten Parkzustand abzustellen.

Vorliegend offenbart ist ferner die Verwendung mehrerer vorliegend offenbarter Stationen und/oder eines vorliegend offenbarten Systems, das mehrere Stationen umfasst und das bevorzugt mehrere Fahrzeuge umfasst, an denen jeweils ein Adapter positionsfest montiert ist, zum Bereitstellen von zumindest einem Fahrzeug, insbesondere von den mehreren Fahrzeugen, für eine Nutzung durch einen Nutzer, bei der er mit dem Fahrzeug von einer ersten der Stationen zu einer zweiten der Stationen fährt und bei der sich das Fahrzeug zu Beginn in einem ersten Parkzustand befindet, in dem es an der einer Halterung einer ersten Station in einer festgelegten Position relativ zu der ersten Station gehalten wird und dabei durch eine Fixiereinrichtung der Halterung ein Lösen des Fahrzeugs von der Halterung verhindert wird und dabei eine Batterie des Fahrzeugs geladen, insbesondere induktiv geladen wird. Bevorzugt bezieht sich die Verwendung darauf, dass sich das Fahrzeug am Ende der Nutzung in einem zweiten Parkzustand befindet, in dem es an einer Halterung einer zweiten Station an einer festgelegten Position relativ zu der zweiten Station gehalten wird und dabei durch eine Fixiereinrichtung der Halterung der zweiten Station ein Lösen des Fahrzeugs von der Halterung verhindert wird und dabei eine Batterie des Fahrzeugs geladen wird. Bevorzugt weisen die Stationen und Fahrzeuge jeweils Merkmale auf, die aus den obigen Ausführungen betreffend verschiedene Ausführungsformen des vorliegend offenbarten Systems, der vorliegend offenbarten Station und des vorliegend offenbarten Verfahrens ersichtlich sind. Allgemein sei an dieser Stelle darauf hingewiesen, dass die beschriebenen erfindungsgemäßen Ausführungsformen jeweils beliebig miteinander kombinierbar sind. Die Verwendung kann, wie erläutert, sich auf die Verwendung mehrerer vorliegend offenbarter Stationen und/oder auf die Verwendung eines vorliegend offenbarten Systems mit mehreren Stationen, insbesondere mehreren vorliegend offenbarten Stationen beziehen.

Besonders bevorzugt wird bei der Verwendung ein Zugriff auf einen Datenspeicher für das Anlegen von Nutzerkonten eingerichtet. Besonders bevorzugt werden die Nutzerkonten in dem Datenspeicher angelegt. Besonders bevorzugt weisen die Nutzerkonten jeweils als ersten Kontoparameter eine Nutzeridentifikationsinformation und als zweiten Kontoparameter eine Fahrzeugbetreiberinformation auf. Die Steuerung ist bevorzugt dazu ausgebildet, nur bei Erkennen einer Authentifizierung eines Nutzers mit einem solchen angelegten Nutzerkonto zuzulassen, dass das Fahrzeug an einer der Stationen in einen bestimmten Parkzustand abgestellt wird, in dem es an einer Halterung dieser Station in einer festgelegten Position relativ zu dieser Station gehalten wird und dabei durch die Fixiereinrichtung der Halterung dieser Station ein Lösen des Fahrzeugs von der Halterung verhindert wird und dabei eine Batterie des Fahrzeugs geladen wird. Die Steuerung ist somit selektiv ausgebildet dahingehend, dass sie selektieren kann und nur dann das Abstellen eines Fahrzeugs in dem genannten bestimmten Parkzustand zulässt, wenn sich ein Nutzer mit einem in dem Datenspeicher abgelegten Nutzerkonto authentifiziert hat. Das Authentifizieren kann beispielsweise über die Kommunikationseinrichtung und/oder Kommunikationsvorrichtung erfolgen. Die Authentifizierung kann wie zu der vorliegend offenbarten Station erläutert durch eine Steuerung der Station, die vorliegend eine Steuerung des gesamten Systems sein kann und somit eine gemeinsame Steuerung sämtlicher Stationen, ausgewertet werden. Besonders bevorzugt wird an einer bestimmten der Stationen das Abstellen des Fahrzeugs in den bestimmten Parkzustand nur zugelassen, wenn eine Authentifizierung eines solchen Nutzers mit einem solchen Nutzerkonto erkannt wurde, dessen zweiter Kontoparameter eine Übereinstimmung mit einer der bestimmten Stationen zugeordneten Fahrzeugbetreiberinformation aufweist. Bei dieser besonders bevorzugten Ausführungsform ermöglicht die vorliegend offenbarte Verwendung somit, dass nur nach Authentifizierung eines Nutzerkontos, dem eine bestimmte Fahrzeugbetreiberinformation zugeordnet ist, das Fahrzeug in dem genannten Parkzustand abgestellt werden kann, wodurch insbesondere Missbrauch einer bzw. der Stationen vermieden werden kann und eine gezielte Fahrzeugbetreiberauswahl getroffen werden kann. Besonders bevorzugt wird die Anzahl der an den jeweiligen Stationen erfolgten

Authentifizierungen abgelegt. Besonders bevorzugt wird bei jeder Authentifizierung eine Fahrzeugidentifizierungsinformation des an der Station gehaltenen Fahrzeugs gespeichert. Besonders bevorzugt wird eine Wartung des mit dieser Fahrzeugidentifizierungsinformation versehenen Fahrzeugs in Abhängigkeit von der ermittelten Anzahl durchgeführt.

Die Erfindung wird nachfolgend anhand von Ausführungsbeispielen unter Bezugnahme auf zwei Figuren näher erläutert.

Es zeigen:
- Figur 1:: in verschiedenen schematischen Prinzipdarstellungen Ansichten auf Bestandteile einer Ausführungsform eines vorliegend offenbarten Systems;
- Figur 2:: in einer schematischen Darstellung eine schematische Erläuterung einer Ausführungsform eines erfindungsgemäßen Verfahrens.

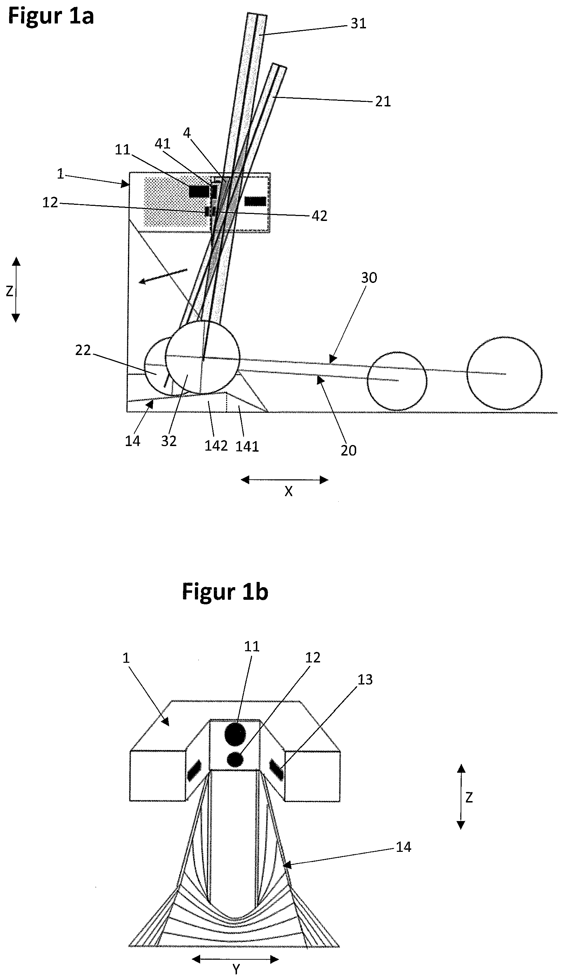

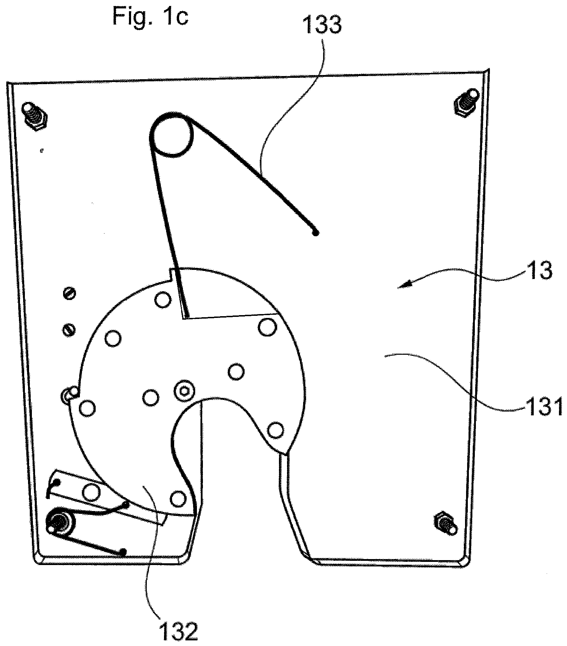

In Figur 1 umfassend Figuren la, 1b und 1c ist eine Ausführungsform eines vorliegend offenbarten Systems in verschiedenen schematischen Prinzipdarstellungen stark vereinfacht dargestellt. In Figur 1 ist eine Station mit einer Halterung 1 dargestellt, an der ein Fahrzeug 20, 30 gehalten ist. Rein zu Veranschaulichungszwecken sind die Fahrzeuge 20, 30 überlappend dargestellt. Bei den Fahrzeugen 20, 30 handelt es sich um E-Scooter, wobei sich die beiden Fahrzeuge 20, 30 unterscheiden. Das Fahrzeug 30 ist größer als das Fahrzeug 20. Im Besonderen sind die Räder 32 des Fahrzeugs 30 größer als die Räder 22 des Fahrzeugs 20, und die Lenkstange 31 des Fahrzeugs 30 weist einen größeren Durchmesser auf und ist länger als die Lenkstange 21 des Fahrzeugs 20. Ferner ist der Neigungswinkel der Lenkstange 31 des Fahrzeugs 30 relativ zur Längsrichtung X größer als der Neigungswinkel der Lenkstange 21 des Fahrzeugs 20. Figur 1a dient zur Veranschaulichung, dass die Halterung zum erfindungsgemäßen Halten der Halteabschnitte beider unterschiedlich ausgestalteter Fahrzeuge 20, 30 ausgebildet ist. Die Halteabschnitte der Fahrzeuge 20, 30 sind jeweils durch einen Abschnitt ihrer Lenkstangen 21, 31 und daran befestigtem Adapter 4 ausgebildet.

Intergral in der Halterung 1 ist eine Ladeeinrichtung 11 und eine Kommunikationseinrichtung 12 der Station ausgebildet, wie insbesondere auch in Figur 1b ersichtlich. An den Lenkstangen 21, 31 der Fahrzeuge 20, 30 ist jeweils ein Adapter 4 positionsfest fixiert, der eine Ladevorrichtung 41 und eine Kommunikationsvorrichtung 42 aufweist. Die Halterung 1 weist einen Aufnahmebereich auf, der einen Querschnitt senkrecht zur Vertikalrichtung Z nach Art eines U aufweist, wobei Ladeeinrichtung 11 und Kommunikationseinrichtung 12 an den Boden des U des Aufnahmebereichs angrenzen. Die Schenkel der U-Form bilden die transversalen Seitenwände des Aufnahmebereichs aus. Der Boden der U-Form bildet die Längsseitenwand am ersten Längsende des Aufnahmebereichs aus. In den Schenkeln der U-Form des Aufnahmebereichs ist das Schließelement 13 der Fixiereinrichtung der beschriebenen Ausführungsform integriert. Das Schließelement 13 ist in Figur 1c stark vereinfacht schematisch dargestellt. Das Schließelement 13 umfasst eine Platte 131 mit einer Aussparung. An der Platte 131 ist eine kreisförmige Drehscheibe 132 drehbar befestigt, die durch eine Federeinrichtung 133 mit einer Federkraft beaufschlagt wird. Die Federkraft der Federeinrichtung 133 wirkt darauf hin, dass sich die Drehscheibe 132 mit ihrer Öffnung so dreht, dass sie auf eine von dem ersten Längsende des Aufnahmebereichs weggewandte Seite der Lenkstange 21, 31 eine Kraft in Längsrichtung X zum ersten Längsende hin ausübt, wenn sich der von der Lenkstange 21, 31 und Adapter 4 ausgebildete Halteabschnitt in dem Aufnahmebereich der Halterung 1 befindet. Die Fixiereinrichtung weist ferner eine Fahrrinne 14 auf, deren Ausgestaltung aus den Figuren 1a und 1b ersichtlich ist. Die Fahrrinne 14 weist einen Gefälleabschnitt 142 und einen Steigungsabschnitt 141 auf. Ferner weist die Fahrrinne 14 einen Querschnitt senkrecht zur Längsrichtung X auf, der eine Form nach Art eines V aufweist, dessen Schenkel sich von einem mittleren Basisbereich aus nach außen hin vertikal nach oben erstrecken. Dabei sind die Schenkel an ihren oberen Enden voneinander beabstandet. Dabei verringert sich der Abstand der Schenkel an ihrem oberen Ende entlang der Gefällerichtung, so dass sie einen im Verlauf der Gefällerichtung abnehmenden Winkel zueinander bilden. Durch die Fahrrinne 14 ist eine Führung des Rads 22, 32 in Transversalrichtung Y und in Längsrichtung X zum ersten Längsende des Aufnahmebereichs hin gewährleistet, so dass die Fahrrinne 14 als Teil der Fixiereinrichtung dazu beiträgt, dass der Halteabschnitt, der in dem Aufnahmebereich angeordnet ist, in dem geschlossenen Zustand der Fixiereinrichtung, in dem die Kreisscheibe 132 so gedreht ist, dass sie ein Herausnehmen des Halteabschnitts am zweiten, dem ersten Längsende gegenüberliegenden Längsende des Aufnahmebereichs verhindert, in seiner Beweglichkeit auf einen Haltetoleranzbereich sowohl in Transversalrichtung Y als auch in Längsrichtung X begrenzt ist. Die vertikale Position des Halteabschnitts ist ohnehin durch die vertikale Höhe festgelegt, in der der Halteabschnitt an der Lenkstange 21, 31 des Fahrzeugs 20, 30 vorgesehen ist.

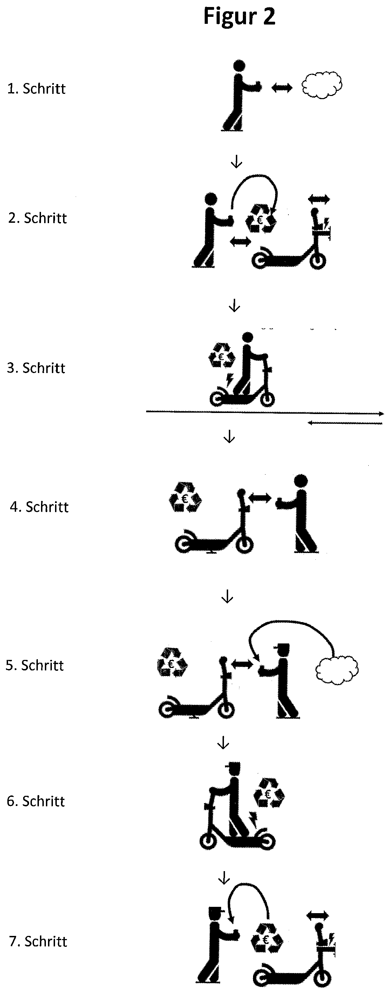

In Figur 2 ist eine Ausführungsform eines erfindungsgemäßen Verfahrens schematisch erläutert dargestellt. Das erfindungsgemäße Verfahren wird zum Betreiben eines Systems eingesetzt, das ein batteriebetriebenes Fahrzeug, das einen elektrischen Antrieb aufweist, und mehrere Stationen umfasst. Bei der beschriebenen Ausführungsform des erfindungsgemäßen Verfahrens legt in einem ersten Schritt ein erster Nutzer ein erstes Nutzerkonto an, das in einer Steuerung des Systems abgelegt wird, wobei die Steuerung insbesondere auf einen in der Cloud befindlichen Datenspeicher zugreifen kann. In einem zweiten Schritt wird eine erste Authentifizierung erkannt, indem sich ein erster Nutzer mit seinem ersten Nutzerkonto an dem Fahrzeug authentifiziert, während das Fahrzeug sich in einem ersten Parkzustand an einer Halterung einer ersten Station in einer festgelegten Position relativ zu der ersten Station befindet und dabei durch die Fixiereinrichtung der Halterung unlösbar an der Halterung gehalten wird und dabei eine Batterie des Fahrzeugs geladen wird, insbesondere induktiv geladen wird. In dem zweiten Schritt wird dem ersten Nutzerkonto eine Pfandbelastungsinformation und ein standort- und/oder zeitabhängiger und/oder batterieladezustandsabhängiger Fahrtstartwert zugeordnet. In dem dritten Schritt benutzt der erste Nutzer das Fahrzeug, um von der Station zu einem anderen Ort zu gelangen. In dem vierten Schritt beendet der Nutzer seine Fahrt und sendet ein Fahrtendesignal an das Fahrzeug aus, das von dem Fahrzeug empfangen wird. Während sich das Fahrzeug nach der ersten Authentifizierung in einem Fahrbereitschaftsbetriebszustand befunden hat, in dem der Nutzer über eine Bedieneinrichtung des Fahrzeugs den elektrischen Antrieb des Fahrzeugs ansteuern konnte, nimmt nach Empfang des Fahrtendesignals die Steuereinrichtung einen Sperrbetriebszustand ein, in dem das Fahrzeug nicht weiter bestimmungsgemäß genutzt werden kann, d. h. in dem die Steuereinrichtung den elektrischen Antrieb des Fahrzeugs auch bei entsprechender Betätigung der Bedieneinrichtung nicht ansteuert. In dem vierten Schritt wird geprüft, ob das Fahrzeug sich in einem zweiten Parkzustand befindet, in dem es an einer Halterung einer zweiten Station in eine festgelegten Position relativ zu der zweiten Station gehalten wird und dabei durch eine Fixiereinrichtung der Halterung der zweiten Station ein Lösen des Fahrzeugs von der Halterung der zweiten Station verhindert wird. Es wird festgestellt, dass dies nicht der Fall ist, da der erste Nutzer das Fahrzeug nicht an einer Station abgestellt hat. Entsprechend wird das erste Nutzerkonto zum einen mit einer Nutzungsgebühr belastet, die in Abhängigkeit von dem Fahrtstartwert und in Abhängigkeit von einem Fahrtendewert ermittelt wird, der bei Empfang des Fahrtendesignals in Abhängigkeit von dem Standort und/oder von der Zeit und/oder dem Batterieladezustand des Fahrzeugs ermittelt wird. In dem fünften Schritt authentifiziert sich ein zweiter Nutzer, der zuvor ein zweites Nutzerkonto angelegt hat, an dem Fahrzeug, so dass das Fahrzeug eine zweite Authentifizierung erkennt.

Nach Erkennen der zweiten Authentifizierung wird die Steuereinrichtung des Fahrzeugs in den Fahrbereitschaftsbetriebszustand versetzt. Außerdem zeigt das Fahrzeug dem zweiten Nutzer eine Gruppe an Sollstationen an, wobei das Fahrzeug idealerweise zu einer der Sollstationen gebracht werden soll. Die Anzeige verläuft über das Smartphone des zweiten Nutzers, mit dem sich der zweite Nutzer auch authentifiziert hat. In dem sechsten Schritt nutzt der zweite Nutzer das Fahrzeug, das sich in dem Fahrbereitschaftsbetriebszustand befindet, und fährt mit diesem Fahrzeug zu einer dritten Station. Im siebten Schritt schiebt der zweite Nutzer an der dritten Station das Fahrzeug in die Halterung der dritten Station, bis sich das Fahrzeug in einem dritten Parkzustand befindet, in dem es an der Halterung der dritten Station in einer festgelegten Position relativ zu der dritten Station gehalten wird und dabei durch eine Fixiereinrichtung der Halterung der dritten Station ein Lösen des Fahrzeugs von der Halterung der zweiten Station verhindert wird und dabei eine Energieübertragung zwischen der Ladeeinrichtung und der Ladevorrichtung stattfindet. In diesem Moment erzeugt die Steuereinrichtung selbststätig ein zweites Fahrtendesignal. Zwar wurde im fünften Schritt mit der zweiten Authentifizierung auch ein zweites Fahrtstartsignal erzeugt und ein zweiter Fahrtstartwert dem zweiten Nutzerkonto zugeordnet, doch wird das zweite Nutzerkonto nicht mit einer nutzungsabhängigen Gebühr belastet, da der zweite Nutzer das Fahrzeug zu einer der angezeigten Sollstationen gebracht hat. Vielmehr wird dem zweiten Nutzerkonto eine Pfandrückgabeinformation gutgeschrieben, was in der Praxis einer Pfandgutschrift auf dem zweiten Nutzerkonto gleichkommt. Entsprechend ermöglicht die beschriebene Ausführungsform des erfindungsgemäßen Verfahrens zum einen eine sehr unkomplizierte Nutzung des Fahrzeugs durch den ersten Nutzer, für die der erste Nutzer in Abhängigkeit von seinem Verhalten zahlt, wohingegen das erfindungsgemäße Verfahren einen finanziellen Anreiz für einen zweiten Nutzer setzt, der darauf abzielt, dass der zweite Nutzer das Fahrzeug an eine sinnvolle Sollstation bringt, an der Bedarf an einem Fahrzeug besteht, und an der das Fahrzeug durch Aufladen nutzungsbereit gehalten wird. Somit ist das erfindungsgemäße Verfahren aufgrund seines Verfahrensablaufs und der entsprechenden Ausgestaltung von Fahrzeugen und Stationen dazu eingerichtet, eine praktische, kosteneffiziente und ökologische Bereitstellung von Fahrzeugen zu ermöglichen.

### Bezugszeichenliste

- 1: Halterung
- 4: Adapter
- 11: Ladeeinrichtung
- 12: Kommunikationseinrichtung
- 13: Schließelement
- 14: Fahrrinne
- 20: Fahrzeug
- 21: Lenkstange
- 22: Rad
- 30: Fahrzeug
- 31: Lenkstange
- 32: Rad
- 41: Ladevorrichtung
- 42: Kommunikationsvorrichtung
- 131: Platte
- 132: Drehscheibe
- 133: Federeinrichtung
- 141: Steigungsabschnitt
- 142: Gefälleabschnitt
- X: Längsrichtung
- Y: Transversalrichtung
- Z: Vertikalrichtung

## Patentansprüche

1. Verfahren zum Betreiben eines Systems, das ein batteriegetriebenes Fahrzeug (20, 30) mit einem elektrischen Antrieb und mehrere Stationen umfasst, wobei
i) in einem ersten Verfahrensschritt das Fahrzeug (20, 30) in einem ersten Parkzustand an einer Halterung (1) einer ersten Station in einer festgelegten Position relativ zu der ersten Station gehalten wird und dabei durch eine Fixiereinrichtung der Halterung (1) ein Lösen des Fahrzeugs (20, 30) von der Halterung (1) verhindert wird und dabei eine Batterie des Fahrzeugs (20, 30) geladen wird, wobei
ii) in einem zweiten Verfahrensschritt ein erster Nutzer, dem ein erstes Nutzerkonto zugeordnet ist, durch eine erste Authentifizierung erkannt wird und danach die Fixiereinrichtung der ersten Station das Fahrzeug (20, 30) freigibt, eine Steuereinrichtung des Fahrzeugs (20, 30) einen Fahrbereitschaftsbetriebszustand einnimmt, in dem sie dazu ausgebildet ist, in Abhängigkeit von einer Betätigung einer Bedieneinrichtung des Fahrzeugs (20, 30) den elektrischen Antrieb zum Antreiben des Fahrzeugs (20, 30) anzusteuern, um eine Benutzung des Fahrzeugs (20, 30) durch den ersten Nutzer zu ermöglichen, um von der ersten Station zu einem anderen Ort zu gelangen, und dem ersten Nutzerkonto als Nutzungsinformation eine Pfandbelastungsinformation und ein erster standort- und/oder zeitabhängiger und/oder batterieladezustandsabhängiger Fahrtstartwert zugeordnet wird und es dem ersten Nutzer ermöglicht wird, unter Akzeptanz einer dauerhaften Belastung seines Nutzerkontos mit der Pfandbelastungsinformation das Fahrzeug zu benutzen, ohne es in einen vordefinierten Parkzustand an einer Station abzustellen und dort laden zu lassen, wobei
iii) in einem dritten Verfahrensschritt ein erstes Fahrtendesignal empfangen wird und nach Empfang des ersten Fahrtendesignals die Steuereinrichtung des Fahrzeugs (20, 30) einen Sperrbetriebszustand einnimmt, in dem sie dazu ausgebildet ist, ein Antreiben des Fahrzeugs (20, 30) mittels des elektrischen Antriebs durch Betätigen der Bedieneinrichtung zu verhindern, und dem ersten Nutzerkonto ein erster Fahrtendewert zugeordnet wird, wobei geprüft wird, ob das Fahrzeug (20, 30) sich in einem zweiten Parkzustand befindet, in dem es an einer Halterung (1) einer zweiten Station in einer festgelegten Position relativ zu der zweiten Station gehalten wird und dabei durch eine Fixiereinrichtung der Halterung (1) der zweiten Station ein Lösen des Fahrzeugs (20, 30) von der Halterung (1) der zweiten Station verhindert wird, und wobei nur dann eine Pfandrückgabeinformation zugeordnet wird, wenn festgestellt wird, dass sich das Fahrzeug (20, 30) in dem zweiten Parkzustand befindet, in dem es in einer festgelegten Position relativ zu der zweiten Station gehalten ist, und anderenfalls die Pfandbelastungsinformation ohne entsprechende Pfandrückgabeinformation dem ersten Nutzerkonto zugeordnet bleibt, wobei
iv) dann, wenn in dem dritten Verfahrensschritt festgestellt wird, dass sich das Fahrzeug (20, 30) nicht in dem zweiten Parkzustand befindet, in einem auf den dritten Verfahrensschritt folgenden vierten Verfahrensschritt ein zweiter Nutzer, dem ein zweites Nutzerkonto zugeordnet ist, durch eine zweite Authentifizierung erkannt wird und danach die Steuereinrichtung des Fahrzeugs (20, 30) in den Fahrbereitschaftsbetriebszustand versetzt wird und dem zweiten Nutzerkonto als Nutzungsinformation ein standort- und/oder zeitabhängiger zweiter Fahrtstartwert zugeordnet wird, wobei dem zweiten Nutzer als Information eine Gruppe an Sollstationen angezeigt wird, und wobei
v) in einem fünften Verfahrensschritt dem zweiten Nutzerkonto nur dann eine Pfandgutschrift zugeordnet wird, wenn festgestellt wird, dass
i) das Fahrzeug (20, 30) sich in einem dritten Parkzustand befindet, in dem es an einer Halterung (1) einer dritten Station in einer festgelegten Position relativ zu der dritten Station gehalten wird und von der dritten Station geladen wird, und wenn festgestellt wird, dass
ii) die dritte Station der Gruppe an Sollstationen angehört, so dass dem zweiten Nutzer, der ein anderer Nutzer als der erste Nutzer ist, die Möglichkeit gegeben wird, sich die Pfandgutschrift zu Nutze zu machen, indem er das fern von der dritten Station abgestellte Fahrzeug zu der dritten Station bringt und von dieser laden lässt, damit es nutzungsbereit ist,
wobei bei einer Feststellung, dass die dritte Station der Gruppe an Sollstationen nicht angehört, dem zweiten Nutzerkonto ein zweiter Fahrtendewert zugeordnet wird und eine Belastungsinformation in Abhängigkeit von dem zweiten Fahrtstartwert und von dem zweiten Fahrtendewert zugeordnet wird.

2. Verfahren nach Anspruch 1,
**dadurch gekennzeichnet, dass**
im vierten Verfahrensschritt nach Erkennen der zweiten Authentifizierung dem zweiten Nutzerkonto eine zweite Pfandbelastungsinformation zugeordnet wird, wobei insbesondere im fünften Verfahrensschritt dem zweiten Nutzerkonto als Pfandgutschrift eine der zweiten Pfandbelastungsinformation zugeordnete zweite Pfandgutschrift zugeordnet wird und insbesondere im Falle des Feststellens, dass die dritte Station der Gruppe an Sollstationen angehört, dem zweiten Nutzerkonto als Pfandgutschrift neben der zweiten Pfandgutschrift zusätzlich eine erste Pfandgutschrift zugeordnet wird, die der dem ersten Nutzerkonto im ersten Verfahrensschritt zugeordneten Pfandbelastungsinformation zugeordnet ist.

3. Verfahren nach einem der vorangehenden Ansprüche,
**dadurch gekennzeichnet, dass**
die Halterung (1) einer jeden von erster, zweiter und dritter Station zur Aufnahme eines Halteabschnitts des Fahrzeugs (20, 30) ausgebildet ist und eine jede von erster, zweiter und dritter Station eine induktive Ladeeinrichtung (11) umfasst, deren Position relativ zu der Halterung (1) in der Station festgelegt ist, wobei die Fixiereinrichtung der jeweiligen Halterung (1)in einem verschlossenen Zustand zum Verhindern eines Entnehmens des Halteabschnitts von der Halterung (1) ausgebildet ist und die in einem offenen Zustand zum Freigeben des Halteabschnitts ausgebildet ist, und wobei die Halterung (1) einen Aufnahmebereich aufweist, der an seinen beiden ihn in einer Transversalrichtung (Y) begrenzenden Transversalenden durch transversale Seitenwände begrenzt ist und an einem ersten ihn in einer senkrecht zur Transversalrichtung (Y) verlaufenden Längsrichtung (X) begrenzenden Längsende durch eine Längsseitenwand begrenzt ist und an seinem dem ersten gegenüberliegenden zweiten Längsende offen ist zum Ermöglichen eines Einschiebens des Halteabschnitts in den Aufnahmebereich ausgehend von dem zweiten Längsende.

4. Verfahren nach Anspruch 3,
**dadurch gekennzeichnet, dass**
der Aufnahmebereich sich zwischen seinen Längsenden in Längsrichtung (X) über mindestens 3 cm erstreckt und die Ladeeinrichtung (11) eine Ladespule mit einer Querschnittsfläche von mindestens 8 cm² aufweist, wobei die Fixiereinrichtung in dem geschlossenen Zustand den Halteabschnitt innerhalb des Aufnahmebereichs auf eine Position innerhalb eines Haltetoleranzbereichs festlegt, der in seiner Transversalerstreckung und in seiner Längserstreckung festgelegt ist, wobei die Ladeeinrichtung (11) dazu ausgebildet ist, eine Übertragung von elektrischer Energie zu einer korrespondierenden Ladevorrichtung (41) innerhalb eines Positionstoleranzbereichs zu ermöglichen, der zumindest dieselbe Transversalerstreckung und dieselbe Längserstreckung wie der Haltetoleranzbereich aufweist.

5. Verfahren nach einem der Ansprüche 3 oder 4,
**dadurch gekennzeichnet, dass**
eine jede von erster, zweiter und dritter Station eine mit einem Datenspeicher verbundene Steuerung aufweist, wobei die Steuerung dazu ausgebildet ist, in dem Datenspeicher Nutzerkonten abzulegen, die jeweils als ersten Kontoparameter eine Nutzeridentifikationsinformation und als zweiten Kontoparameter eine Fahrzeugbetreiberinformation aufweisen, wobei die Steuerung dazu ausgebildet ist, nur bei Erkennen einer Authentifizierung eines Nutzers mit seinem Nutzerkonto, dessen zweiter Kontoparameter eine Übereinstimmung mit einer der Station zugeordneten Fahrzeugbetreiberinformation aufweist, die Fixiereinrichtung zum Einnehmen des geschlossenen Zustands anzusteuern und Energie über die Ladeeinrichtung (11) abzugeben und/oder dazu ausgebildet ist, die Anzahl der Authentifizierungen abrufbar abzulegen und/oder bei jeder Authentifizierung eine Fahrzeugidentifizierungsinformation des an der Station gehaltenen Fahrzeugs (20, 30) in dem Datenspeicher abzuspeichern.

## Claims

1. Method for operating a system which comprises a battery-powered vehicle (20, 30) with an electric drive and several stations, wherein,
i) in a first method step, the vehicle (20, 30) is held in a first parked state on a holder (1) of a first station in a set position relative to the first station and, in the process, the vehicle (20, 30) is prevented from being released from the holder (1) by a fixing device of the holder (1) and, in the process, a battery of the vehicle (20, 30) is charged, wherein,
ii) in a second method step, a first user to whom a first user account is assigned is detected through a first authentication, and then the fixing device of the first station releases the vehicle (20, 30), a control device of the vehicle (20, 30) adopts an operating state of readiness for use, in which it is formed to activate the electric drive depending on an actuation of an operating device of the vehicle (20, 30) in order to drive the vehicle (20, 30), for enabling a usage of the vehicle (20, 30) by the first user to get from the first station to another location, and a deposit debit information item and a first journey start value dependent on location and/or time and/or dependent on a battery state of charge are assigned as usage information to the first user account, and the first user is enabled to use the vehicle (20, 30), with acceptance of a permanent debit of his user account via the deposit debit information, without having to park it in a predefined parking state at a station and have it charged there, wherein
iii) in a third method step, a first journey end signal is received and, after the first journey end signal has been received, the control device of the vehicle (20, 30) adopts a locked operating state in which it is formed to prevent the vehicle (20, 30) from being driven by means of the electric drive by actuation of the operating device, and a first journey end value is assigned to the first user account, wherein it is checked whether the vehicle (20, 30) is in a second parked state, in which it is held on a holder (1) of a second station in a set position relative to the second station and, in the process, the vehicle (20, 30) is prevented from being released from the holder (1) of the second station by a fixing device of the holder (1) of the second station, and wherein a deposit return information item is assigned only if it is established that the vehicle (20, 30) is in the second parked state, in which it is held in a set position relative to the second station, and otherwise the deposit debit information remains assigned to the first user account without a respective deposit return information, wherein,
iv) in a fourth method step following the third method step, if it is established in the third method step that the vehicle (20, 30) is not in the second parked state, a second user to whom a second user account is assigned is detected through a second authentication, and then the control device of the vehicle (20, 30) is placed in the operating state of readiness for use, and a second journey start value dependent on location and/or time is assigned as usage information to the second user account, wherein a group of setpoint stations is displayed as information to the second user and wherein,
v) in a fifth method step, a deposit credit is assigned to the second user account only if it is established that
i) the vehicle (20, 30) is in a third parked state, in which it is held on a holder (1) of a third station in a set position relative to the third station and charged by the third station, and if it is established that,
ii) the third station is part of the group of setpoint station,
so that the second user, who is a different user from the first user, is given the opportunity to make use of the deposit credit by taking the vehicle (20, 30), which has been parked away from the third station, to the third station and let it charge by this station for being ready for use, wherein if it is established that, the third station is not a part of the group of setpoint stations, the second user account is assigned a second journey end value and a debit information is assigned to the second user account, in dependency of the second journey start value and the second journey end value.

2. Method according to claim 1,
**characterized in that**,
in the fourth method step, after the second authentication has been detected, a second deposit debit information item is assigned to the second user account, wherein in particular, in the fifth method step, a second deposit credit assigned to the second deposit debit information item is assigned as a deposit credit to the second user account, and in particular, if it is established that the third station belongs to the group of setpoint stations, in addition to the second deposit credit, a first deposit credit, which is assigned to the deposit debit information item assigned to the first user account in the first method step, is also assigned to the second user account as a deposit credit.

3. Method according to any of the preceding claims, **characterized in that**, the holder (1) of each of first, second and third station, is configured for receiving a holding portion of the vehicle (20, 30) and each of first, second and third station comprises an inductive charging device (11) the position of which relative to the holder (1) in the station is set, wherein the fixing device of the respective holder (1) in a closed state is formed to prevent the holding portion from being removed from the holder (1) and which in an open state is formed to release the holding portion, and wherein the holder (1) has a receiving region which, at its two transverse ends delimiting it in a transverse direction (Y), is delimited by transverse side walls and, at a first longitudinal end delimiting it in a longitudinal direction (X) running perpendicular to the transverse direction (Y), is delimited by a longitudinal side wall and is open at its second longitudinal end opposite the first in order to make it possible to push the holding portion into the receiving region starting from the second longitudinal end.

4. Method according to claim 3,
**characterized in that**
the receiving region extends between its longitudinal ends in the longitudinal direction (X) over at least 3 cm, and the charging device (11) has a charging coil with a cross-sectional area of at least 8 cm2, wherein the fixing device, in the closed state, sets the holding portion within the receiving region to a position within a holding tolerance range, which is set in terms of its transverse extent and its longitudinal extent, wherein the charging device (11) is formed to make it possible to transmit electrical energy to a corresponding charging apparatus (41) within a position tolerance range which has at least the same transverse extent and the same longitudinal extent as the holding tolerance range.

5. Method according to claims 3 or 4,
**characterized in that**
each of the first, second and third station has a controller connected to a data memory, wherein the controller is formed to store in the data memory user accounts which in each case have a user identification information item as first account parameter and a vehicle operator information item as second account parameter, wherein the controller is formed to activate the fixing device to adopt the closed state, and to output energy via the charging device (11), only if an authentication of a user with their user account the second account parameter of which corresponds to a vehicle operator information item assigned to the station is detected, and/or is formed to retrievably store the number of authentications and/or, in the case of every authentication, to store in the data memory a vehicle identification information item for the vehicle (20, 30) held at the station.

## Revendications

1. Procédé de fonctionnement d'un système, le système comprenant un véhicule alimenté par batterie (20, 30) équipé d'un moteur électrique et plusieurs stations, dans lequel
i) dans une première étape du procédé, le véhicule (20, 30) est maintenu dans un premier état de stationnement sur un support (1) d'une première station dans une position fixe par rapport à la première station et en même temps le véhicule (20, 30) est empêché de se détacher du support (1) par un dispositif de fixation du support (1), et une batterie du véhicule (20, 30) est chargée, dans lequel
ii) dans une deuxième étape du procédé, un premier utilisateur, auquel est attribué un premier compte utilisateur, est identifié par une première authentification, après quoi le dispositif de fixation de la première station libère le véhicule (20, 30), un dispositif de commande du véhicule (20, 30) passe dans un état de fonctionnement prêt à rouler, dans lequel il est conçu pour commander, en fonction de l'actionnement d'un dispositif de commande du véhicule (20, 30), le moteur électrique destiné à propulser le véhicule (20, 30), afin de permettre l'utilisation du véhicule (20, 30) par le premier utilisateur, afin de se rendre de la première station à un autre lieu, et une information de débit de consigne ainsi qu'une première valeur de démarrage de trajet dépendant de la localisation et/ou de l'heure et/ou de l'état de charge de la batterie sont attribuées au premier compte d'utilisateur à titre d'informations d'utilisation, permettant au premier utilisateur, en acceptant un débit permanent sur son compte d'utilisateur, d'utiliser le véhicule avec les informations de débit de consigne sans le garer dans un état de stationnement prédéfini à une station pour y être rechargé, dans lequel
iii) dans une troisième étape du procédé, un premier signal de fin de trajet est reçu et, après réception du premier signal de fin de trajet, le dispositif de commande du véhicule (20, 30) passe dans un état de fonctionnement de blocage dans lequel il est conçu pour empêcher la propulsion du véhicule (20, 30) au moyen du moteur électrique par l'actionnement du dispositif de commande, et une première valeur de fin de trajet est attribuée au premier compte d'utilisateur, un contrôle étant effectué pour vérifier si le véhicule (20, 30) se trouve dans un deuxième état de stationnement, dans lequel il est maintenu sur un support (1) d'une deuxième station dans une position fixe par rapport à la deuxième station et en même temps le véhicule (20, 30) est empêché de se détacher du support (1) de la deuxième station par un dispositif de fixation du support (1) de la deuxième station, et dans lequel des informations de restitution de consigne ne sont attribuées que s'il est constaté que le véhicule (20, 30) se trouve dans le deuxième état de stationnement, dans lequel il est maintenu dans une position fixe par rapport à la deuxième station, et dans le cas contraire, les informations de débit de consigne restent attribuées au premier compte d'utilisateur sans informations de restitution de consigne correspondantes, dans lequel
iv) lorsqu'il est constaté, lors de la troisième étape de la procédure, que le véhicule (20, 30) ne se trouve pas dans le deuxième état de stationnement, un deuxième utilisateur, auquel est attribué un deuxième compte d'utilisateur, est identifié par une deuxième authentification lors d'une quatrième étape de la procédure suivant la troisième étape, après quoi le dispositif de commande du véhicule (20, 30) est mis en état de fonctionnement prêt à rouler et une deuxième valeur de démarrage de trajet dépendant de la localisation et/ou de l'heure est attribuée au deuxième compte d'utilisateur à titre d'information d'utilisation, un groupe de stations de destination étant affiché au deuxième utilisateur à titre d'information, et dans lequel
v) dans une cinquième étape du procédé, un crédit de consigne n'est attribué au deuxième compte d'utilisateur que s'il est constaté que
i) le véhicule (20, 30) se trouve dans un troisième état de stationnement, dans lequel il est maintenu sur un support (1) d'une troisième station dans une position fixe par rapport à la troisième station et est chargé par la troisième station, et s'il est constaté que
ii) la troisième station appartient au groupe de stations cibles, de sorte que le deuxième utilisateur, qui est un utilisateur différent du premier utilisateur, se voit offrir la possibilité de bénéficier du crédit de consigne en amenant le véhicule garé loin de la troisième station vers cette dernière et en le faisant charger par celle-ci afin qu'il soit prêt à l'emploi,
dans lequel, s'il est constaté que la troisième station n'appartient pas au groupe de stations de destination, une deuxième valeur de fin de trajet est attribuée au compte du deuxième utilisateur et une information de débit est attribuée en fonction de la deuxième valeur de démarrage de trajet et de la deuxième valeur de fin de trajet.

2. Procédé selon la revendication 1,
**caractérisé en ce que**
dans la quatrième étape du procédé, après détection de la deuxième authentification, une deuxième information de débit de consigne est attribuée au deuxième compte d'utilisateur, une deuxième information de crédit de consigne, associée à la deuxième information de débit de consigne, étant notamment attribuée au deuxième compte d'utilisateur comme crédit de consigne dans la cinquième étape du procédé, et notamment dans le cas où il est constaté que la troisième station appartient au groupe de stations de destination, un premier crédit de consigne, associé à l'information de débit de consigne attribuée au premier compte d'utilisateur lors de la première étape du procédé, est attribué au deuxième compte d'utilisateur comme crédit de consigne, en plus du deuxième crédit de consigne.

3. Procédé selon l'une quelconque des revendications précédentes,
**caractérisé en ce que**
le support (1) de chacune des première, deuxième et troisième stations est conçu pour recevoir une partie de retenue du véhicule (20, 30) et chacune des première, deuxième et troisième stations comprend un dispositif de chargement inductif (11) dont la position par rapport au dispositif de fixation (1) est définie dans la station, le dispositif de fixation du support (1) respectif étant conçu pour empêcher, dans un état fermé, le retrait de la partie de retenue du support (1) et qui est conçu pour être dans un état ouvert afin de libérer la partie de retenue,
et dans lequel le support (1) présente une zone de réception qui est délimitée, à ses deux extrémités transversales la délimitant dans une direction transversale (Y), par des parois latérales transversales et, à une première extrémité longitudinale la délimitant dans une direction longitudinale (X) perpendiculaire à la direction transversale (Y) par une paroi latérale longitudinale et est ouverte à son deuxième extrémité longitudinale opposée à la première afin de permettre l'insertion de la partie de retenue dans la zone de réception à partir de la deuxième extrémité longitudinale.

4. Procédé selon la revendication 3,
**caractérisé en ce que**
la zone de réception s'étend entre ses extrémités longitudinales dans la direction longitudinale (X) sur au moins 3 cm et le dispositif de chargement (11) comporte une bobine de charge d'une section transversale d'au moins 8 cm², le dispositif de fixation, à l'état fermé, fixant la partie de retenue à l'intérieur de la zone de réception dans une position comprise dans une plage de tolérance de retenue définie dans son extension transversale et son extension longitudinale, le dispositif de charge (11) étant conçu pour permettre un transfert d'énergie électrique vers un dispositif de charge correspondant (41) à l'intérieur d'une plage de tolérance de position qui présente au moins la même extension transversale et la même extension longitudinale que la plage de tolérance de retenue.

5. Procédé selon l'une quelconque des revendications 3 ou 4,
**caractérisé en ce que**
chacune des première, deuxième et troisième stations comporte un dispositif de commande relié à une mémoire de données, le dispositif de commande étant conçu pour enregistrer dans la mémoire de données des comptes d'utilisateurs qui comportent chacun, comme premier paramètre de compte, des informations d'identification d'utilisateur et, comme deuxième paramètre de compte, des informations d'exploitant de véhicule, le dispositif de commande étant conçu pour, uniquement lors de la détection d'une authentification d'un utilisateur avec son compte utilisateur dont le deuxième paramètre de compte correspond à une information d'exploitant de véhicule associée à la station, commander le dispositif de fixation pour qu'il prenne l'état fermé et fournir de l'énergie via le dispositif de charge (11) et/ou pour enregistrer le nombre d'authentifications de manière disponible et/ou de stocker dans la mémoire de données, à chaque authentification, des informations d'identification du véhicule (20, 30) arrêté à la station.
